# EUROPEAN PATENT SPECIFICATION

(11) **EP 3 405 670 B1**
(45) Date of publication and mention of the grant of the patent: **11.03.2020**
(21) Application number: 17701916.3
(22) Date of filing: 20.01.2017
(51) Int. Cl.: F03B 13/10, F03B 13/26

(54) **MARINE POWER GENERATION SYSTEM**
SYSTEM FÜR MEERESENERGIEERZEUGUNG
SYSTÈME DE PRODUCTION D'ÉNERGIE MARINE

(30) Priority: 21.01.2016 GB 201601162; 21.01.2016 GB 201601163; 15.03.2016 GB 201604380; 21.03.2016 GB 201604742
(43) Date of publication of application: 28.11.2018
(73) Proprietor: Sustainable Marine Energy Limited, Edinburgh EH6 6QW (GB)
(72) Inventor: HAYMAN, Jason, Leith Central Scotland EH6 6QW (GB); BURDEN, Christopher, Leith Central Scotland EH6 6QW (GB); HUNT, Andrew, Leith Central Scotland EH6 6QW (GB); URQUHART, Kevin, Leither Edinburgh EH6 6QW (GB)
(74) Representative: Warren, Caroline Elisabeth
(86) International application number: PCT/GB2017/050152
(87) International publication number: WO 2017/125760

(56) References cited:
- GB-A- 2 460 309
- JP-A- S5 572 665
- US-A1- 2006 222 461

## Description

The present invention relates to marine systems, e.g. for generating power from flowing water. Some embodiments are surface-based, while others are underwater or submersible. In particular, some aspects relate to the installation, control, adjustment (e.g. of position and/or orientation) and maintenance of such assemblies, whether such assemblies are surface-based or submersible/underwater assemblies.

Turbine-based power generation systems can be submerged in order to extract power from flowing water. The water flow in a given location may be unidirectional, such as in a river, or bidirectional, for example where local flow is dominated by tidal effects. Alternatively, turbine-based power generation systems can be arranged to operate on the surface of a body of water. Much the same principles apply in either of these cases.

US 2006/0222461 describes an undersea power generation apparatus. The apparatus comprises two turbines mounted side by side at either side of a support strut of hydrofoil-shaped cross section, each turbine having a set of turbine blades which counter rotate so as to cancel out the respective torque produced by each turbine. The apparatus is pivotally interconnected at point to a pair of mooring cables, which are moored to the seabed. The turbines are positively buoyant such that in zero current they point vertically upwards. When the current flows in one direction, the drag forces on the turbines and the support strut cause the apparatus to pivot and pitch over. In this position the force of water flowing past the turbines causes the turbine blades to rotate. When the tide begins to change direction, the magnitude of the water current flowing past the apparatus decreases. Accordingly, the apparatus tends to float back into the vertical condition. Eventually, due to the effect of the tide, water begins to flow in the other direction, and the apparatus pitches over again.

JP S55-72665 discloses a cylindrical buoy and forms a buoyant element having: a *vena contracta* passage to contract a flow of ocean current and tidal current formed on the centre line; a bulbous water-wheel generator installed therein; and a captive shaft provided on the inlet side. Where the flow inverts in direction, the buoyant element inclines as a backward sectional primary moment is larger than a forward one. A resultant force of buoyancy weight and drag of the buoyant element and a tension of the rope are balanced to hold a stable horizontal postu re.

Described herein is a turbine assembly having: a rigid support structure; and a first turbine system, supported by the support structure, the first turbine system having a centre of mass and being pivotally connected to the support structure so that the first turbine system is rotatable, relative to the support structure, about a centre of rotation; wherein the first turbine system includes a first flowing-water driveable turbine for generating power from water flow, the first turbine having an operational axis, and being designed for optimum power output when local water flow is aligned with the operational axis; and wherein the centre of rotation is spaced away from the centre of mass of the first turbine system in a direction parallel to the operational axis of the turbine.

This arrangement allows turbines to be mounted on the assembly and to passively flip to maximise their power output. Passive flipping means that no external input is required to rotate the turbines to achieve this effect. Instead, the water flow itself causes the turbines to come closer to alignment with the water flow. This arrangement does not require complex actuator systems to implement the flipping, and the device is therefore simpler, and less prone to mechanical failures. Such a passive flipping system will result in the turbine system operating in a downstream flow mode in which the part of the turbine which produces the greatest hydrodynamic drag, usually the turbine blades, is the most downstream part of the system, meaning that the water flow hits this part of the system last. This is because the flow of water past the turbine forces the turbine blades to swing away from the direction from which the flow is coming, in order to settle into a position of stable equilibrium.

In this context, the first turbine system being supported by the support structure means that the support structure constrains the turbine system to the same general location, relative to the support structure, although the turbine system is still able to rotate, as described above. Put another way, this means that the support structure is arranged to withstand any mechanical forces caused by the weight of the turbine system, or drag forces acting on the assembly as a whole, while providing a stable location for mounting the turbine system, and allowing it to rotate, as described above.

When a turbine is described as being designed for optimum power output when local water flow is aligned with the operational axis, this means that the turbine will operate to most efficiently convert kinetic energy from water flowing past it into other, more useful forms of energy, typically electricity, when local water flows is along a particular axis relative to the turbine. In particular, it should be noted that turbines are able to generate useful energy from local water flow even if the local water flow is not exactly aligned with the operations axis. Often turbines have blades which rotate, tracing out a cone or a disc. The operational axis in these cases usually extends through the centre of the disc or the apex of the cone, as appropriate.

In this context, local water flow simply means the direction in which the water around the turbine is moving. Typically for both rivers and tidally dominated systems, water flow will be predominantly in either a single direction or two opposite directions in a cycle which varies with time. In these examples, the absolute direction in which water flows does not change greatly with position, or in other words, the flow in adjacent regions is usually in approximately parallel directions.

In particular, this arrangement means that in the absence of external forces acting on it (e.g. from local current flow), the turbine system will align its operational axis with the local gravitational field, that is to say, vertically. This provides a stable position when there is no current flow. In addition, since current flow is typically substantially horizontal, that is to say it is dominated by a component perpendicular to the local gravitational field, the stable, vertical, position does not naturally favour any particular direction of current flow, and therefore allows the turbine system to rotate to align itself with local water flow when this changes, unimpeded by its orientation prior to the change in water flow. This effect may be particularly advantageous when the assembly extracts power from water flow driven primarily by tidal flow patterns, as the local flow will cycle between strong flow in a first direction; no flow; strong flow in a second direction opposite to the first direction; no flow; and then the cycle repeats, starting again with strong flow in the first direction. In these conditions, the turbine system will rotate towards aligning its operational axis with the water flow in the first direction, then when the local flow drops to zero, its operational axis will point vertically, then as flow increases in the second direction, the turbine system will rotate towards aligning its operational axis with the water flow in the second direction, before rotating back to vertical when flow drops to zero.

In this context, the turbines do not necessarily align themselves fully with the local water flow. As noted above, it is not necessary that exact alignment between the operational axis and the local water flow is achieved in order for useful power to be extracted. Therefore, while exact alignment is the optimal position, even a partial alignment allows the system to function to extract energy from flowing water. Putting this another way, the operational axis of the turbine may be changed so that the angle between it and the local water flow is reduced, or that the operational axis rotates towards becoming parallel with the local fluid flow.

Also described herein is a turbine assembly having: a support structure; and a first turbine system, supported by the support structure, the first turbine system being rotatable relative to the support structure; wherein the first turbine system includes a first flowing-water driveable turbine for generating power from water flow, the first turbine having an operational axis, and being designed for optimum power output when local water flow is aligned with the operational axis; and wherein the first turbine system is mounted so as to rotate about a horizontal axis r elative to the support structure in response to local water flow so that it brings the operational axis of the first turbine towards alignment with the direction of local water flow.

This arrangement also allows turbines to be mounted on the assembly and to passively flip to maximise their power output. Passive flipping means that no external input is required to rotate the turbines to achieve this effect. Instead, the water flow itself causes the turbines to come closer to alignment with the water flow. This arrangement does not require complex actuator systems to implement the flipping, and the device is therefore simpler, and less prone to mechanical failures. Such a passive flipping system will result in the turbine system operating in a downstream flow mode in which the part of the turbine which produces the greatest hydrodynamic drag, usually the turbine blades, is the most downstream part of the system, meaning that the water flow hits this part of the system last. This is because the flow of water past the turbine forces the turbine blades to swing away from the direction from which the flow is coming, in order to settle into a position of stable equilibrium.

Optionally, such a turbine assembly further includes the first turbine system having a centre of mass and being pivotally connected to the support structure so that the first turbine system is rotatable about a centre of rotation; and wherein the centre of rotation is spaced away from the centre of mass of the first turbine system in a direction parallel to the operational axis of the turbine.

The turbine assembly may be submersible. In other words, the turbine assembly may be configured to operate substantially or fully underwater. In some cases, this may allow an optimum height between the water bed and the surface of the body of water to be selected, for example to avoid floating debris or sand, stone etc. dragged along a water bed by local currents and/or to position the assembly at a depth corresponding to a particular current speed (e.g. maximum flow, optimal flow for the turbines, etc.).

Alternatively, the turbine assembly may be configured for operation at the surface of a body of water, for example, large portions may be arranged to be above the surface of the water in normal operations. In some surface-based designs, the assembly may nonetheless be substantially submerged, with only a small portion of the assembly being above the water surface in normal use. The common features of turbine assemblies configured for operation at a water surface is that a portion is intended to be above the water surface in normal operation, and that the turbines are arranged to extract power from water flow near the surface, i.e. in the top third of the water column. Surface based devices can be simpler to install, operate and maintain than submersible assemblies. Even when surface based, the turbines may me mounted low enough that the turbine blades do not emerge from the water at any point during a revolution. This can improve efficiency of the assembly, as the blades are driven by the local water current at all points during their rotation.

The first turbine system may be rotatable independently of the parts of the support structure to which the first turbine system is directly connected. This allows fewer parts of the assembly to rotate, consequently simplifying the design.

The first turbine system has a centre of mass and is pivotally connected to the support structure so that the first turbine system is rotatable about a centre of rotation; and wherein the centre of rotation is spaced away from the centre of mass of the first turbine system in a direction parallel to the operational axis of the turbine. In this arrangement, in the absence of external forces acting on it (e.g. from local current flow), the turbine system will align its operational axis with the local gravitational field, that is to say, vertically. This provides a stable position when there is no current flow. In addition, since current flow is typically horizontal, that is to say it is dominated by a component perpendicular to the local gravitational field, the stable, vertical, position does not naturally favour any particular direction of current flow, and therefore allows the turbine system to rotate to align itself with local water flow when this changes, unimpeded by its orientation prior to the change in water flow. This effect may be particularly advantageous when the assembly extracts power from water flow driven primarily by tidal flow patterns, as the local flow will cycle between strong flow in a first direction; no flow; strong flow in a second direction opposite to the first direction; no flow; and then the cycle repeats, starting again with strong flow in the first direction. In these conditions, the turbine system of the present invention will rotate towards aligning its operational axis with the water flow in the first direction, then when the local flow drops to zero, its operational axis will point vertically, then as flow increases in the second direction, the turbine system will rotate towards aligning its operational axis with the water flow in the second direction, before rotating back to vertical when flow drops to zero.

The turbine system further includes a second flowing-water driveable turbine for generating power from water flow, the second turbine having an operational axis, and being designed for optimum power output when local water flow is aligned with the operational axis; and wherein the operational axes of the first and second turbines are parallel with one another. By placing two turbines on the same assembly, more power may be generated per platform, thereby increasing efficiency.

Moreover, the turbine system includes a beam connecting the first turbine and the second turbine. The use of a beam to connect the two turbines forces the two turbines to rotate together. This means that they can both contribute to the rotational motion, and thereby rotate in a more efficient manner.

The first turbine is mounted on one surface of the beam, and the second turbine is mounted on a second, opposing surface of the beam. For example, the turbines may be mounted above and below the beam when the turbines are aligned with a substantially horizontal flow of water. This allows the torque generated by each turbine rotating to cancel, and thus reduces stresses on the support structure.

The beam may further comprise a hydrodynamic foil having a drag coefficient which varies with orientation, and wherein the turbines are mounted on the hydrodynamic foil so that their operational axes are aligned with the orientation in which the drag coefficient of the hydrodynamic foil is at a minimum. This arrangement allows the beam to contribute to the passive flipping, as the beam will naturally find its lowest drag arrangement in flowing water, and thereby assist the turbine system in rotating. The beam or foil may also be shaped to provide lift to encourage the turbine system to rotate into an operational orientation.

Optionally, the or each turbine may have a fairing to reduce hydrodynamic drag. Reduction of drag on assemblies allows their anchoring systems to be simpler, and the design of the system less complex, since the overall stresses will be lower.

Moreover, the or each turbine may have a fairing having a drag coefficient which varies with orientation, and is lowest in the orientation which is aligned with the operational axis of the turbine. This arrangement provides a boost to the inherent passive flipping effect of the turbines, in much the same way that a hydrodynamic foil does.

The support structure may comprise a platform, and the turbine system may be spaced away from the platform by supports around which the turbine system can rotate about an axis generally parallel to the plane of the platform. This arrangement separates the structural support requirements of the assembly from the moveable portions of the assembly. This allows the moveable portions to be designed without requiring them to also perform a structural role.

The turbine system may be supported above the platform. This arrangement means that the entire assembly can rest on dry land prior to installation, or during repair operations, using the platform as a base, and keeping the turbines away from the ground, to prevent damage.

The turbine system may further be arranged to rotate in response to changes of local water flow so that the turbine blades rotate away from the platform. By rotating the turbines in the direction which takes them away from the platform (i.e. rotating them up, when the platform is below the turbines, and rotating them down in the event that the platform is above the turbines), there is no requirement for there to be enough space between the platform and the rotational axis of the turbine to fit the full length of the turbine. This allows a more compact structure, and saves on materials and building costs. It also reduces the chance that the turbine blades and the structure will collide, damaging one or both of them in the process.

The assembly may further comprise an actuator to rotate the turbine system. This may be beneficial in the event that the alignment between the operational axis and the local flow of the turbine system is not exact, and a slight adjustment must be made. In this case, exact alignment can be achieved by using the actuator, and more power can be extracted from the flowing water.

The assembly may further comprise a brake to resist the rotation of the turbine system. It may be necessary at times to restrict or entirely stop the rotation of the turbine system, for example to prevent damage to the turbine or the assembly. In particular, it may be necessary to lock the turbine system with its operational axis vertical to inhibit power generation, in the event of rough seas.

The turbine assembly may further comprise a second turbine system, supported by the support structure, the second turbine system having a centre of mass and being pivotally connected to the support structure so that the second turbine system is rotatable, relative to the support structure, about a centre of rotation; wherein the second turbine system is of the same design, and is connected to the support structure in the same way, as the first turbine system. In particular, the second turbine system may include third and fourth turbines, preferably mounted on opposing sides of a second beam. By providing two complete turbine systems of the same design, the power output of the assembly can be doubled.

The assembly may be positively buoyant in water, and may be anchored to a water bed, so that the assembly is held in a state of floating equilibrium. In this state, the assembly may be situated high up in the water column, which has a larger amount of energy available for extraction than lower parts of the water column. The state of floating equilibrium, in which the upward buoyant force is cancelled by the downward component of tension in the anchoring means holds the assembly rigidly. Rigidly holding the assembly in this way allows the directions in which the turbines can rotate to face, to be set at installation. Since the design is rigid, this direction will not change with time. This may be particularly advantageous when applied to systems for extracting tidal energy, in which the water flow is typically always along one of two opposite directions.

The assembly may be variably buoyant. This may be advantageous when installing the assembly, as the buoyancy can be made low while the system is being lowered to its operational depth, thus requiring smaller forces to lower it, and then once it is in position, and the anchoring system in place, the buoyancy can be increased to hold the assembly rigidly in floating equilibrium.

Also disclosed herein is a turbine assembly for generating power from water flow, having: a centralised onboard control module for providing control signals to the turbine assembly, wherein the control module comprises a watertight dry space containing electronic control systems. Centralising the control systems allows a reduction in the number and size of dry spaces, and thereby simplifies the design of the assembly.

The onboard control module of the turbine assembly may be removably coupled to the assembly. In such an embodiment, the control module is detachable from the assembly. For example, the module may be cold swappable, so that the module can be removed from the assembly while the assembly is surfaced (on a surface vessel, or even a dockside). In combination with the centralised nature of the module, this allows a quick and simple repair of the workings of the assembly. Since the control systems often comprise moving parts and/or electronic systems, they are the most likely parts to develop a fault. In the worst case scenario, the assembly can be quickly repaired by simply swapping a damaged or faulty module with a new one. Additionally, the assembly may be upgraded in a simple manner, for example with new control systems, by swapping an existing module with an updated one.

The turbine assembly may have an onboard control module which further contains hydraulic actuation systems. This provides a further centralisation of features so that the design of the assembly may be further simplified.

The onboard control module may further contain mechanical actuators for providing mechanical motive power to the turbine assembly. Once again, this provides a further centralisation of features so that the design of the assembly may be further simplified.

The onboard control module may further contain power transfer systems for transferring power generated by the turbine assembly to an external location. Once again, this provides a further centralisation of features so that the design of the assembly may be further simplified.

Also disclosed herein is a turbine assembly for generating power from water flow, the turbine assembly being positively buoyant in water, and arranged to be an chored to a water bed, the turbine assembly having: a support structure for mounting turbines, comprising a plurality of hollow, watertight trusses. This arrangement allows the support structure to fulfil dual roles of mechanical support and buoyancy, thus resulting in a simpler and lighter design.

The hollow trusses may have a variable buoyancy. This assists with installing the assembly, as the buoyancy can be made low while the system is being lowered to its operational depth, thus requiring smaller forces to lower it, and then once it is in position, and the anchoring system in place, the buoyancy can be increased to hold the assembly rigidly in floating equilibrium.

The buoyancy of the hollow trusses may be varied by selectively flooding their hollow spaces. This further allows the trusses to perform a dual role, and thus reduces the complexity of the system.

The hollow trusses may have a fairing to reduce hydrodynamic drag. Since lower drag forces mean lower stresses on the structure, the whole system can be made simpler and lighter, thus reducing building costs.

The turbine assembly of the first aspect may further include the centralised onboard control module of the second aspect and/or the support structure of the third aspect, which may be provided in conjunction with any of the further features set out above.

Assemblies such as those described above can be used for a variety of purposes, for example for generating power from flowing water using turbines. In general, an assembly is attached or coupled to a water bed at a plurality of anchoring points, with cables, chains or rigid connections being made between the water bed and the assembly. In such an arrangement, the distance between each anchoring point and its respective attachment point on the assembly may be used to adjust the orientation of the assembly.

Submersible assemblies may be supported at a distance from the water bed. For example, in the event that the submersible assembly is buoyant, it may be held in a state of floating equilibrium, in which it is stably held spaced apart from the water bed. As well as adjusting the orientation of the submersible assembly, the distance between the anchoring points and the attachment points can be used to adjust the distance above the water bed at which the submersible assembly floats. This may be particularly useful, for example, when installing a submersible assembly, or raising it for maintenance or removal, when the assembly will need to be raised to, or lowered from the surface of the water.

In the case of surface-based assemblies, the orientation may be adjusted as set out above. In addition, the water depth may vary with time. For example, power generation often makes use of tidal flow. In such locations, the water depth may change significantly due to those same tidal effects. Consequently, the length of the anchoring cables, chains, etc. can be adjusted in order to raise or lower the assembly to match the variations in water depth (and consequently in distance from water bed to water surface).

Also described herein is a module for adjusting the position and/or orientation of an assembly, wherein: the module is detachably dockable to a docking point on an assembly; the module has an actuator; and the module is arranged to dock with the assembly and transfer motive power from the actuator to the assembly to adjust the position and/or orientation of the assembly. In this arrangement, the actuator is located on the detachably dockable module, and therefore need not remain with the assembly for the entire lifetime of the assembly. Since the actuator may represent a significant part of the cost of a assembly, yet may only be required occasionally (e.g. for installation, and infrequent adjustments to the orientation or position of the assembly) a detachable actuator system can enable one actuator system to service a plurality of assemblies. This can save cost, and allow each assembly to be less complex. In addition, if the actuator develops mechanical faults, or if modifications are required, the actuator can be worked upon more conveniently if, the actuator is stored above water, and on dry land for most of its life. Out of water storage can also reduce the risk of water damage to sensitive equipment.

As described above, the assembly may be a submersible assembly. Alternatively, the assembly is configured for operation at the surface of a body of water. In either case, the required adjustments can be made remotely without needing to send a person,

The motive power may be transferred from the actuator to one or more of: anchoring means; variable buoyancy devices; and/or hydrodynamic surfaces; for adjusting the position and/or orientation of the assembly. It may be preferable to perform adjustments to the attitude (that is pitch, roll and yaw) of the assembly by altering the tension in parts of the anchoring system. Similarly the tension in each anchoring line can be adjusted by changing the buoyancy of the device, thereby altering the rigidity of the anchoring system. The buoyancy may be changed for example by selectively flooding ballast tanks, or emptying them by forcing compressed air into them, the process being controlled by the motive force supplied by the actuator. Indeed, only certain ballast tanks out of a plurality of ballast tanks could be flooded, in order to cause the assembly to tilt or list. Altering hydrodynamic surfaces (also called control surfaces) can control the height of the device above the water bed, as the hydrodynamic surfaces react dynamically to local flow conditions. Hydrodynamic surface adjustments may be implemented by altering the angle at which a local current encounters a hydrodynamic surface, or by rotating a hydrofoil, the necessary movements being provided by the motive force supplied by the mechanical actuator.

Moreover, the module may transfer rotational motive power to the turbine assembly. In particular, the actuator may be a motor, for example. In this way the module provides a versatile type of power to the assembly, in a form which is simple to transfer, for example via gears and/or other couplings.

Preferably, the rotational motive power is transferred to a winch which is mounted on the assembly, for example, this allows the tension in a mooring line connected to the winch to be altered. In this way, the distance between an anchoring point on a water bed, and an attachment point on the assembly (the winch) may be altered, thereby changing the orientation and/or position of the assembly. This provides a simple method of altering the orientation and/or position of the assembly and/or of lowering and raising.

Moreover, the actuator may comprise a plurality of motors, each motor transferring motive power to a respective winch which is mounted on the assembly, to alter the tension in a plurality of mooring lines. In a preferred embodiment, each mooring line is connected individually to a different one of the winches. Optionally, the winches are spaced apart from one another. This arrangement allows a large degree of control, and improves the ability to fine tune the orientation and/or position of the assembly.

Optionally, the module may further be equipped with a hydraulic pressure system, and the module may be arranged to operate hydraulic machinery on the assembly by transferring hydraulic pressure to the assembly while the module is docked with the assembly. Once again, this arrangement allows equipment which is rarely used, but may represent a significant cost, to be detachable from the assembly. This allows a single set of hydraulics machinery to be used to install or modify a plurality of assemblies. In addition, storage of the machinery need not be at sea or even under the surface of a body of water, but can be on land, which may lengthen the lifetime of the machinery, and allow easy access for repairs or modifications.

Optionally, the module may further be arranged to supply electrical power to the assembly. This may allow the design of the assembly to be further simplified.

Optionally, the module may further be arranged to supply control signals to the assembly. This may allow the design of the assembly to be further simplified.

The module may further be equipped with locking means to selectively secure the module to the assembly. This may allow the module to remain fixed relative to the assembly while adjustments to the position and/or orientation are made. This may increase the probability of successful adjustments being made by ensuring that the module remains in contact with the assembly while the adjustment process is carried out, thereby improving efficiency.

The module may transfer power to the assembly via an interface, which may be moveable between a retracted position and an extended position. This allows the interface to be protected from accidental damage while it is not needed, without sacrificing functionality.

The module may further comprise an imaging system, which allows an operator to view the operation from a remote location. For example, the entire assembly, or just the docking point, may be some distance below the water surface, and the operator may be on a boat on the surface, or even on the shore. In this scenario, the imaging system allows the operator to ensure that the docking and actuation procedure is completed correctly, while not requiring a human presence (e.g. a diver) at the docking location, thus improving safety, and reducing costs and complexity.

The imaging system may comprise a camera and/or a sonar system. Cameras are readily available and cheap to run. Cameras may operate primarily at human-visible wavelengths, (approximately 400 to 700 nanometres) or outside this range, depending on the application. If needed, the imaging system may further comprise a light, in the event that the assembly or the docking portion is deep enough in the water that little or no light is able to penetrate from the surface, or in the event that operations are conducted at night time. Sonar systems are widely used in sub-sea operations, and provide useful information to an operator either in addition to, or instead of imaging systems based on electromagnetic radiation.

The module may be manually and remotely controllable, in order to align the module with the docking point on the assembly. This allows an operator to be located physically separated from the module and/or the assembly, for example on a boat on the surface, or even on the shore. By using the remote-controlled feature, the operator can ensure that the module docks with the assembly, and correctly provides control, while eliminating the need for a human presence (e.g. a diver), thereby reducing cost and complexity, and improving safety.

Alternatively, the module may have an automatic guidance system to guide the module to the docking point on the assembly. By providing the module with an automatic guidance feature, human input may be further reduced, and costs saved.

Optionally, the module may comprise means for coupling to a passive guidance system to guide the module to the docking point on the assembly. For example, the passive guidance system may comprise one or more cables or chains coupled to the assembly, along which the module can slide, to guide it to the correct location on the assembly. In this embodiment, the module can couple to the cables or chains to slide down the cables or chains, and guide itself into position. The module may couple to the cables or chains using sprocket wheels, clamps, pulleys or by threading the cable or chain through one or more guide apertures, for example. This provides a simple but effective way of guiding the module to the correct location on the assembly. Moreover, the cables or chains may themselves be detachable from the assembly, to minimise the impact of the assembly on nearby operations. Optionally, the module may have an interface on its lower surface for transferring power to the assembly. Optionally, the module further has attachment points on its upper surface for connecting support and/or power cables. This arrangement allows the module to be lowered onto the assembly from above, e.g. from the water surface, and to rest there. This helps the module to attach stably to the assembly, and makes the alignment and docking process easier to control.

Optionally, the module may have protective struts positioned at its exterior to prevent damage to the module. This allows the module to operate, for example in rough water conditions, in which it may be difficult to prevent the module crashing into other underwater objects, including parts of the assembly, without becoming damaged from such collisions.

The module may further have an interface for transferring power to the assembly, and a fairing which tapers towards the interface. The tapering of the fairing may allow the module an improved degree of coarse alignment with the docking point on the assembly.

The module may optionally be connectable to an umbilical cable for providing power or control signals to the module from a remote location. This reduces the complexity of the module, as batteries or other sources of power need not be present on the module. In addition, the equipment for producing the power or control signals may be located away from the module on the surface of the water, or even on the shore, thus protecting it in the event of an operational error in which sensitive parts of the module come into contact with water.

The module may optionally further have means to determine whether the module is aligned with the docking point prior to engaging the actuator. These means may be mechanical, electronic, pneumatic, hydraulic, or any combination thereof. For example, there may be protrusions on the module which are required to fit into corresponding indentations on the submersible assembly. Alternatively, there may be sensors provided on either the module or the assembly which supply a signal indicative of the docking status of the module.

The module may further comprise variable buoyancy means for adjusting the buoyancy of the module. This can allow the module to be submerged or raised in a quicker and/or safer manner. In addition, it may be easier to seat the module correctly on the assembly if the buoyancy is reduced.

Also disclosed herein is an assembly with a docking point for a module for adjusting the position and/or orientation of the assembly. Preferably, the module comprises a module as described above in relation to the fourth aspect. In this arrangement, the module and the assembly act like a plug and socket, in which the module acts like a plug, and is designed to cooperate with the assembly, which acts like a socket. The use of cooperating features in this way helps to ensure that docking is correctly performed, and improves the efficiency of the operation.

The assembly may further have an interface for receiving motive power from the module. This allows the assembly to actuate moving parts of its structure, without requiring on-board motive means. This may reduce the unit cost of each assembly. The interface may further include means to cooperate with corresponding portions of the module, to allow the module to determine whether the module is aligned with the docking point. This allows selective prevention of actuation of the systems on board the module, in the event that the docking step has not completed correctly, thereby improving operational efficiency of the system as a whole.

The assembly may further have a door, or door arrangement comprising a plurality of doors, biased towards a closed position, in which the interface is covered, and moveable to an open position in response to the module. By providing this feature, the interface of the assembly may be protected from damage by accidental collisions with other objects, for example rubbish, marine animals and man-made submersibles and boats. By biasing the door to the closed position, the doors act to protect the interface while the module is detached from the assembly. In one implementation, the door comprises an arrangement of bombbay doors.

In particular, the door may be moveable to the open position by the module contacting the door and pushing it to the open position. This arrangement provides a simple manner in which the module can operate the door to open it. In effect, the module can, for example, be used to push the door out of the way so that the module can dock with the assembly.

The assembly may have variable buoyancy, the variable buoyancy being controllable by the module. Variable buoyancy may be particularly advantageous when raising or lowering the assembly to/from the water surface, e.g. to partially or fully submerge it. Providing the module with means to control this allows a greater proportion of the control to be handled by the module, and consequently allows the assembly to be simpler in construction as fewer systems are required to be onboard.

The assembly may vary its buoyancy by selectively flooding or emptying ballast tanks. This provides a convenient method of adjusting the buoyancy, and one which can be simply controlled by the systems provided on the module.

Also disclosed herein is a method of adjusting the position and/or orientation of an assembly, comprising the steps of: docking a control module to the assembly; adjusting the position and/or orientation of the assembly by actuating the actuator of the module; and detaching the module from the assembly. The steps in which a module is docked and detached allow the various components used in adjusting the position and orientation of the assembly to be used only while adjustments are being made. At other times, these components are not present on the assembly, and may instead be put to use on a different assembly, or stored somewhere above the surface of the water, on dry land, etc. They may even be separated from the assembly for the purposes of repair or modification. Overall, the system is more efficient, as there is no requirement for these systems to be permanently attached to the assembly.

Preferably, the control module comprises a module as set out above in the fourth aspect. The module may be provided together with any of its preferred features set out above.

Advantageously, the assembly used in the method of this example is the assembly described above. This arrangement ensures compatibility between the different cooperating parts of the devices used to carry out the method.

Embodiments will now be described with reference to the drawings, in which:
Figure 1 is a perspective view of an embodiment of an assembly of the present invention;
Figure 2 is a perspective view of another embodiment of an assembly of the present invention;
Figure 3 is a detailed perspective view of a portion of the assembly of Figure 2, showing a turbine;
Figure 4 is a side view of an embodiment of an assembly of the present invention.
Figure 5 is a perspective view of an onboard control module according to an embodiment of the present invention;
Figure 6 is a sectional view of the onboard control module of Figure 5 shown mounted on an embodiment of a submersible assembly according to the present invention;
Figure 7A is a perspective view of a module which is not part of the claimed invention;
Figure 7B is a perspective view of the module of Figure 7A viewed from another angle;
Figure 7C is a side view of the module of Figures 7A and 7B;
Figure 8 is a detailed view of a portion of the module of Figures 7A-7C;
Figure 9 is a perspective view of the arrangement of some of the components of the module shown in Figures 7A-7C, with the outer casing removed;
Figure 10A is a perspective view of the docking point of a submersible assembly according to a example which is not part of the claimed invention, in which a protective door is closed;
Figure 10B is a perspective view of the docking point of the submersible assembly of Figure 10A in which a protective door is open;
Figure 11A is a sectional view of the beginning of an exemplary docking procedure in which the module docks with the submersible assembly, which is not part of the claimed invention;
Figure 11B is a sectional view of an intermediate phase of an exemplary docking procedure in which the module docks with the submersible assembly, which is not part of the claimed invention; and
Figure 11C is a sectional view of a later part of a docking procedure which is not part of the claimed invention.

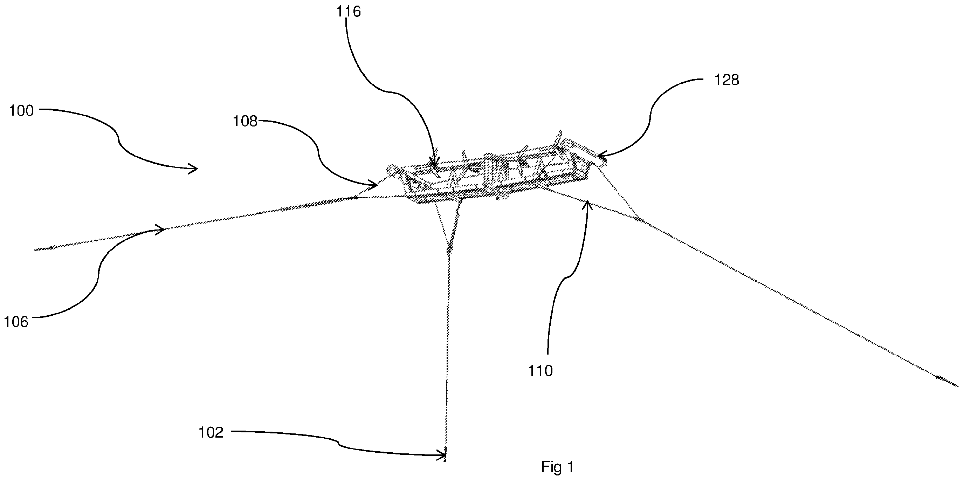

Figure 1 shows a perspective view of an assembly 100 according to an embodiment. A series of anchoring points 102 are provided on the water bed to which primary anchoring lines 106 are attached. The anchoring lines bifurcate into upper 108 and lower 110 anchoring lines, each of which attaches to the assembly 100 at a different location. It is not necessary for the anchoring system of the present invention to bifurcate in this way, and a single anchoring line is possible.

The assembly 100 is buoyant in water, with the buoyancy being provided by buoyancy devices 126. These may simply be fixed buoyancy devices such as air-filled tanks, or foam based buoyancy devices. Or they may be variable buoyancy devices which can be selectively flooded with water to reduce their buoyancy or filled with air and sealed to increase their buoyancy. The assembly 100 is held in a state of floating equilibrium by the combination of the upward buoyant force from the buoyancy devices 126 and the downward component of tension in the anchoring lines 106, 108, 110. It is not necessary for the present invention to be anchored in this way. It is possible, for example, for the whole assembly to be a rigid structure permanently affixed to the water bed.

In some cases, the floating equilibrium holds the assembly on, at or near the water surface, while in other cases the assembly is substantially or entirely submerged in the body of water. In particular, the assembly may be held in a position of floating equilibrium in a fully submerged position.

The assembly 100 has a support structure 112 in the form of a series of beams linking the buoyancy devices together. These beams provide support to a turbine system 114, which comprises a turbine 116 rotatably mounted to the support structure 112. The turbines 116 are arranged to rotate in response to external forces from a local water flow. This is discussed in more detail below.

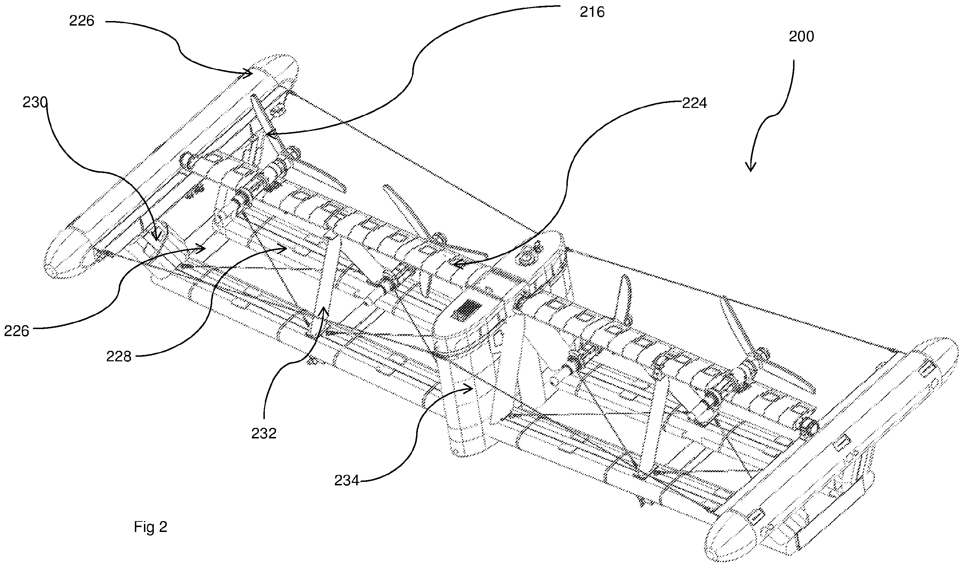

Turning now to Figure 2, another assembly 200 according to an embodiment of the present invention is shown. The anchoring system is omitted from this Figure, but the anchoring systems discussed above in relation to Figure 1 could be used in this embodiment too. The assemblies shown in Figures 1 and 2 are each suitable for situating at the surface of a body of water or submerging in the body of water.

The assembly 200 has a set of four buoyancy devices 226, two at each end. Each of these may be fixed or variable, as described above. Each pair of buoyancy devices is spaced apart from one another by a pair of vertical support members 230. The support structure further includes a plurality of horizontal trusses 228 spanning the width of the assembly and connecting the lower buoyancy device 226 at one end of the assembly 200 to the lower buoyancy device 226 at the other end. These trusses 228 may be simple trusses, or they may be hollow and selectively floodable to alter the buoyancy of the assembly. Rising from the trusses 228 are a pair of intermediate vertical supports 232. Between the vertical supports 232, and also rising from the trusses 228, is a central pontoon 234. The central pontoon 234 may be hollow, and may further be air-filled, water filled, or selectively floodable to achieve variable buoyancy, depending on the buoyancy requirements of the system.

A beam 224 spans between the upper buoyancy device 226 at one end of the assembly 200 to central pontoon 234, and a second beam spans between the upper buoyancy device 226 at the other end of the assembly and the central pontoon 234. Each of these beams is supported approximately at its midpoint by one of the intermediate vertical supports 232.

Four turbines 216 are mounted on the beam 224 in pairs (each pair being referred to in this embodiment as a turbine system) with one turbine 216 from each pair being located between an intermediate support 232 and a buoyancy device 226, and the other turbine of the pair being located between the intermediate support 232 and the central pontoon 234. Both turbines 216 have their blades facing in the same direction, as explained in more detail below. In this case, the turbine systems are each arranged to rotate independently of the parts of the support structure 226, 232, 234 to which they are directly connected. That is, the turbine system is able to rotate, but the parts of the support structure which it connects to do not rotate.

One turbine 216 of the pair is mounted on top of the beam 224, and the other turbine 216 is mounted below the beam. When the direction of water flow changes, the turbines 216 and the beam 224 rotate together. Once the direction of water flow has completely reversed, for example when the tide is no longer ebbing, but is flowing instead, the turbines will have rotated so that their turbine blades will be facing in the opposite direction. Moreover, the turbine 216 which was previously situated on top of the beam 224 will then be located below the beam 224, while the turbine 216 which was previously underneath the beam 224 will now be located on top of the beam 224.

The beam 224 is shaped to act as a hydrodynamic foil, and has a coefficient of drag which changes depending on its orientation relative to local water flow. In particular, it has an orientation of minimum coefficient of drag, and it will rotate to align this with local water flow. This example of a beam has a plane of symmetry, which is beneficial in the present system as it means that it will work equally well when the turbines 216 (and thus the beam 224 as well) are oriented in a first direction as when they are oriented in a second direction opposite to the first direction. It is not necessary that the beam 224 have these hydrodynamic properties, and instead it may simply have the function of connecting the turbines 216 together so that they rotate as a single unit. In fact, in some embodiments the beam 224 may not even be arranged to connect the turbines 216 in this way. It may simply serve as an axis around which the turbines 216 rotate, while remaining static relative to the rest of the support structure.

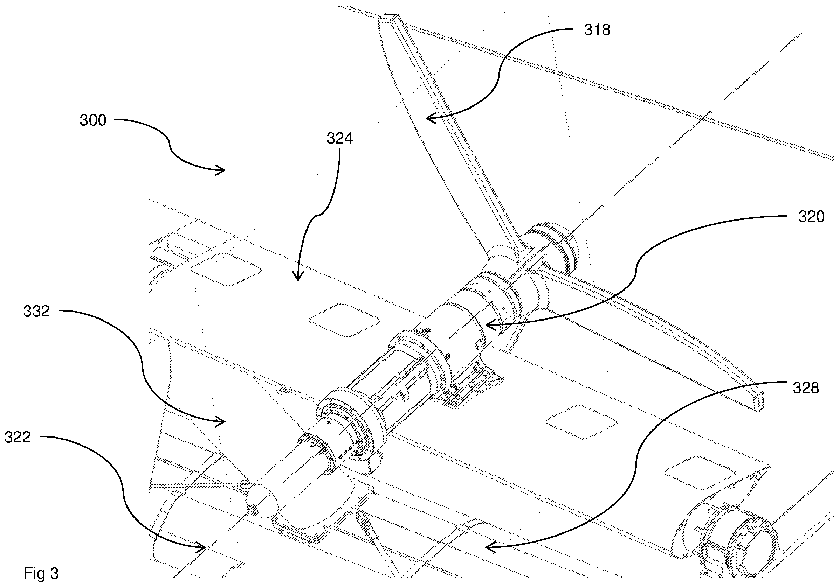

A turbine 316, mounted on a beam 324 (once more shaped to act as a hydrodynamic foil) is shown in more detail in Figure 3. This Figure shows a turbine 316 mounted as described in relation to the embodiment shown in Figure 2. It will, however, be clear to the skilled person that the detailed description of the turbine 316 may be applied to other embodiments, in particular those with a larger or smaller number of turbines than the four shown in Figure 2.

The turbine 316 has a generally elongate body, contained in nacelle 320 located at the front (upstream) end of the turbine 316. The nacelle 320 provides a streamlined enclosure within which generators are housed, as well as optionally other equipment, for example AC/DC converters, transformers, sensing equipment, or actuators and/or brakes for controlling the rotation of the turbine 216. The streamlined shape helps to reduce drag on the structure as a whole. Although the nacelle 320 is shown as smooth in this embodiment, fins, foils or other hydrodynamic shapes can be included to assist the turbines 316 in interacting with local water flows to cause them to rotate.

Any suitable generator for the anticipated water current and turbine characteristics can be provided. However, in one particular embodiment, the generator is arranged to receive rotational motive power and convert it into a more useful form of energy, typically electrical energy. The machinery of the generator is often relatively heavy compared with the rest of the turbine 316, and tends to result in the centre of mass of the turbine 316 being located towards the middle, or even towards the front (upstream end) of the nacelle 320.

Mounted at the rear (downstream end) of the nacelle 320 are turbine blades 318. Typically these are mounted on a driveshaft which feeds into the generator. The blades 318 are shaped and mounted so that water flow from the nacelle 320 to the blades 318 will cause them to rotate. A dashed line 322 represents the operational axis of the turbine 316. The turbine 316 is designed so that when the operational axis 322 is aligned parallel to the direction of local water flow, the turbine 316 achieves optimum power generation for a given local water flow rate. Primarily this is achieved by altering the shape and mounting angle of the turbine blades 318.

As shown, the turbine is mounted on the beam 324 towards the rear (downstream end) of the nacelle 320. Since in this embodiment the turbine 316 rotates along with the beam 324 and the centre of mass of the turbine 316 is inside the nacelle 320, this means that the point of rotation and the centre of mass of the turbine are not at the same place. In other words, they are spaced apart from one another.

This arrangement causes a torque due to gravity on the turbine 316, tending to rotate the turbine 316 (and the beam 324 in this embodiment) so that its rear end points downwards (i.e. its operational axis 322 tends towards the vertical). When there is a water current, this torque can be counteracted, at least in part, and a position of stable equilibrium can be attained, in which the front end of the nacelle 318 receives the water current first, which flows over the nacelle 320 and the beam 324, before reaching the turbine blades 318.

When the water flow hits the turbine blades 318, they rotate, and cause the driveshaft to rotate too, thereby feeding rotational power to the generator and causing useful power, e.g. electrical power, to be generated. This process results in the turbine blades 318 generating a large drag force which provides a counter-torque to the torque due to gravity acting on the centre of mass of the turbine 316, thus stabilising the turbine 316 in the water flow, with its operational axis 322 dragged away from the vertical, and closer to alignment with the water flow.

Since the position of equilibrium attained in this way depends on the water flow, the turbine 316 responds dynamically to changes in water flow. In particular, water flow in a first direction will hold the turbine aligned with the water flow in a first direction, for example in the direction shown Figure 3. Then, as the flow rate drops, the drag force reduces causing the torque due to gravity to be opposed less and less strongly, and the turbine 316 rotates until the turbine blades are at the top. This is because, absent any external forces, the centre of mass (located at the middle or front of the nacelle 320) will tend to move to place itself directly below (as determined by the local gravitational field) the centre of rotation. As the water flow increases again, for example in a second direction opposite to the first direction as would be seen in a tidally dominated system, the drag forces on the turbine 316 increase, and oppose the gravitational torque. This time, the drag forces cause the turbine 316 and beam 324 to rotate to align with the second direction of water flow, that is to say, the turbine 316 faces in the opposite direction to that shown in Figure 3.

The hydrodynamic shape of the beam 324 may assist the turbine 316 in rotating from the orientation in which the operational axis 322 is vertical, by presenting a large drag coefficient while the turbine operational axis 322 is vertical, and a progressively lower drag coefficient as the orientation of the operational axis approaches alignment with the local direction of water flow. In addition, water flowing over the foil 324 first, and the turbine 316 later helps to smooth the flow, and improve power generation from the turbine 316.

Figure 3 shows a single turbine 316 mounted on a beam 324, along with a second, adjacent beam. The adjacent beam may also have a turbine mounted on it, and both turbines may be arranged to rotate in a pair, along with their respective beams. This may be achieved, for example, by forming the hydrodynamic foil as a covering on a generally cylindrical beam. The fairing may then extend up to the intermediate support 332 which separates the two portions of fairing from one another. The intermediate support 332 may further have an aperture comprising bearings to allow the cylindrical beam to pass through and rotate. The second portion of fairing and second turbine may then be provided on the other side of the intermediate support 332 in a similar manner.

The turbine 316 in Figure 3 is shown mounted on top of the beam 324, although clearly when the turbine 316 rotates to adapt to a change in current flow direction, this may change, and the turbine 316 may later located below the beam. It is entirely possible to mount the turbine 316 in such a way that the nacelle 320 extends as equally as far above and below the beam 324. This arrangement may be preferred for systems in which turbines 316 may rotate independently of any other turbines on the assembly, including single turbine assemblies. This is because a turbine 316 can only align its operational axis 322 vertically by using gravity alone, if the centre of mass is spaced apart from the centre of rotation along a line parallel to the operational axis 322. Clearly this requires that the axis about which the turbine 316 rotates must intersect the operational axis 322, which further requires that the beam 324 supports the turbine 316 in such a way that it intersects the nacelle 320, rather than passing above or below it. Allowing the operational axis 322 to self-orient vertically in the absence of external forces means that the turbine 316 is not biased towards a particular direction of current flow.

As described above, turbine 316 may be arranged to rotate together with a second turbine, by virtue of sharing a common beam 324. In this arrangement, both turbines 316 and the beam 324 are collectively known as a turbine system. The turbine 316 shown in Figure 3 is mounted above the beam. In order to reduce torques on the support structure, and also to allow the turbine system to orient the operational axes of the two turbines vertically, the second turbine should be mounted below the beam with its operational axis parallel to that of the first turbine, and separated from the common axis of rotation (as defined by the beam 324 with which both turbines collectively rotate) by the same distance as the first turbine 316 is separated from this axis, when the two turbines are of identical design. This is equivalent to saying that the centre of mass is the same height for rotational deflections of equal magnitude in either direction relative vertically oriented operational axes 322, so there is no inherent preferred direction for the turbines to rotate towards.

This detailed description has proposed mounting the turbines 316 with the beam 324 providing a centre of rotation for the turbines 316 located between the centre of mass and the turbine blades, so that in the absence of external forces the turbine 316 rotates to vertically orient its operational axis 322 with its blades 318 uppermost. However, it is entirely possible to arrange the mounting location of the turbine 316 on the beam 324 so that the centre of mass of the turbine 316 is located between the beam 324 and the turbine blades 318. In this case, the turbine 316 may still rotate to align its operational axis 322 vertically, but in this configuration, the blades 318 represent the lowest point of the turbine 316.

While the foregoing has described how turbines 316 may use forces generated by interacting with local water streams to bring their operational axes 322 towards alignment with local water flow, even with assistance from the beam 324 and its hydrodynamic properties, it may not be possible to exactly align the turbine operational axis 322 with the local water flow. It is therefore contemplated that an actuator may be provided to rotate the turbine 316 or the beam 324 to make small corrections, and thereby improve power generation.

Additionally, the turbine 316 or beam 324 may be supplied with a brake to resist rotation. This may allow the turbine to be locked in a particular position, for example it may be used to lock a turbine 316 with its operational axis 322 aligned with local current flow, even as the strength of the flow drops. This ensures that the turbine 316 keeps its operational axis 322 aligned with the flow, even when the flow is not strong enough to fully counteract the gravitational torque.

Finally, a brake may also be useful in retaining the turbine 316 in the orientation in which its operational axis 322 is vertical, to inhibit power generation, for example if repairs are being carried out to the assembly, or if the flow rate is outside safe limits.

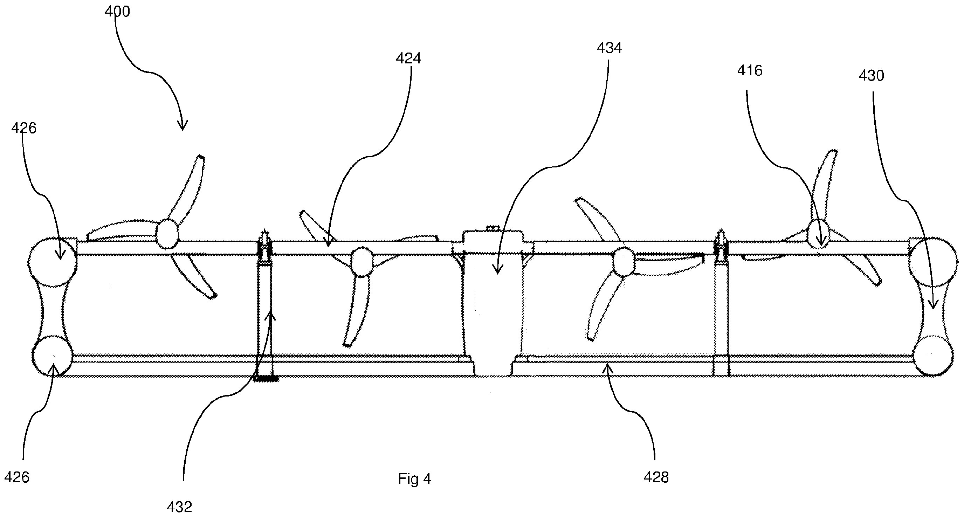

Turning now to Figure 4, the mounting of turbines 416 in pairs is clearly shown. This Figure shows a side view of the embodiment of Figure 3. In addition to the buoyancy devices 426; trusses 428; central pontoon 434; end 430, and intermediate 432, vertical supports already described in detail in reference to Figure 2, it can clearly be seen that each pair of turbines 316, situated either side of the central pontoon 434, comprise a turbine 416 mounted above the beam 424 and a turbine 416 mounted below the beam 424. It is also clear that each turbine is spaced away from the central plane of the beam by the same distance, whether above it or below it.

The view in Figure 4 shows the importance of carefully selecting the direction in which the turbine blades should point when there is no current flow. If the turbines 416 were arranged to rotate so that their blades are the lowest point of the turbine in the absence of external forces (i.e. the centres of mass of the turbines 416 are located between the beam 424 and the turbine blades), then there is a danger that the blades could collide with the trusses 428 or other parts of the support structure, damaging the device. Therefore, the turbines 416 are mounted with the beam 424 between their centres of mass and their blades in this embodiment.

Of course designs are contemplated where the support structure forms a platform similar to that shown in Figure 4, but where the turbines are mounted vertically below the platform, instead of above it, as shown in Figure 4. In this case, the arrangement in which the centres of mass of the turbines 416 are located between the beam 424 and the turbine blades would be appropriate to ensure that the blades rotate to the bottom of the turbines 416 in the absence of external forces. In general, the turbines rotate in such a way as to cause the blades to rotate away from the platform.

Arrangements where the turbines are mounted below the platform may be preferable for assemblies configured to remain on, at or near the surface of a body of water during normal operation because the main body of the assembly can float near/on the surface, while the turbines are suspended below the main body. This allows a combination of the ease of a surface-based assembly with the improved power generation obtained by positioning the turbines high in the water column, but away from floating debris.

Finally, it should be noted that the support structure could also be designed in such a way that there was sufficient clearance for the blades that the turbines can rotate in any direction, in which case the above considerations are less important.

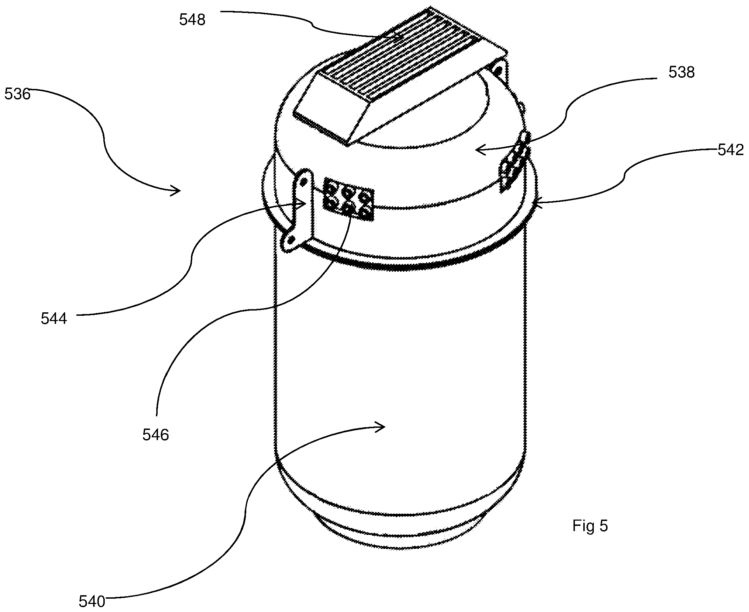

Turning now to Figure 5, there is shown an embodiment of a centralised onboard control module 536 according to a second aspect of the present invention. This design comprises an upper torispherical dome portion 338 and a lower generally cylindrical portion 540. These are joined together by a watertight seal 542.

The control module 536 contains electronic control systems for the turbine assembly, for example to control actuators or brakes on the turbines of the assembly to change their rotational status. In principle, this allows these water-sensitive components to be sealed on dry land, to protect them from water damage, and subsequently the module 536 can be attached to the turbine assembly and submerged. In the event of accidental damage, the centralised nature of these control systems allows them to be easily removed and repaired.

The control module 536 is provided with a mounting bracket 544 or similar means so that it can be simply mounted and/or detached as the need arises. In particular, the control module 536 may be removable in its entirety form the assembly. For example, in the event that the module develops a fault, or needs an upgrade, the assembly may be raised to the surface, the module removed, and repairs or replacement of the module can be made, as appropriate.

In addition, other systems such as hydraulic actuators, mechanical actuators, pneumatic systems, and high power electrical equipment may also be housed in the module 536. This allows easy and centralised access to these key systems, while keeping them safe in a dry space. Centralising in this way means that fewer spaces need be sealed, and monitored to ensure safe working of the apparatus.

Externally, the module is provided with cable feedthroughs 546 for outputting control signals (in the form of electronic, or other suitable, e.g. fibre optic, signals) or electrical power as required, or for receiving electrical power e.g. from the turbines, for processing with high power electrical equipment prior to transferring to an external location, e.g. for feeding into a local electricity grid.

There may further be provided mechanical, hydraulic or pneumatic feedthroughs (not shown) for transferring mechanical power from corresponding mechanical, pneumatic or hydraulic actuators located inside the module 536 to the rest of the assembly. These may be used, for example to adjust the anchoring system of the turbine assembly, or to control the variable buoyancy.

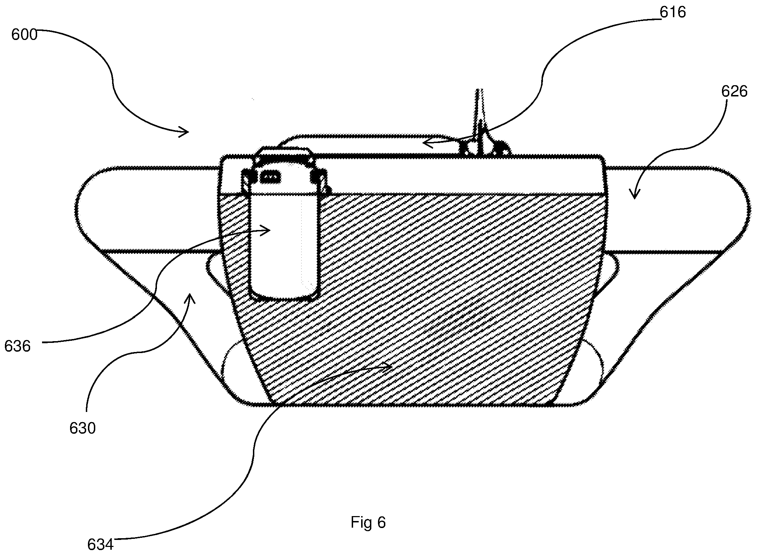

Figure 6 shows a sectional view through the central pontoon of the embodiment of a turbine assembly 600, as shown in Figures 2 and 4. The buoyancy devices 628 and vertical end supports are visible 630, as is a turbine 616. The central pontoon 634 is shown with the centralised onboard control module 636 mounted in a recess. As discussed above, the mounting of the module may be permanent, or it may be removable for repair or replacement purposes. This arrangement is purely exemplary, and the control module 636 may be recessed in a different location, or even to the exterior of the assembly, depending on the desired outcome.

Indeed, as set out in the description below, this consolidation of control and actuation components can be further developed to allow a plurality of turbine assemblies to share some or all of these components, by allowing the module to be detachable, and in some cases autonomous or semi-autonomous. In particular, the systems only used intermittently can be grouped into a separable module.

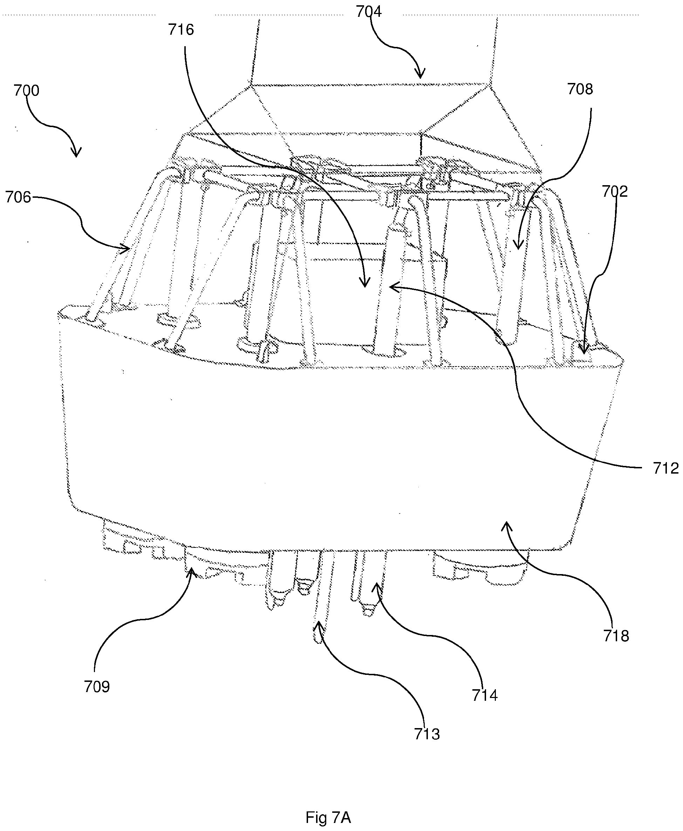

Referring to Figure 7A, there is shown a module 700, which is not part of the claimed invention but which may be useful for understanding the present disclosure, supported from above by cables 704. The support cables 704 attach to the module 700 at four points 702. In this arrangement, the module 700 may be supported from above, for example by a ship on the surface of a body of water using a crane, and lowered into position using the cables 704.

The module 700 may be lowered into the correct position using the cables, and either manual or automatic guidance. For example, the module 700 may be provided with automatic guidance and control systems which detect the location of an assembly with which the module is configured to dock, and control the module in order to direct it to the desired location. Additionally or alternatively, the module 700 may be manually controllable, wherein an operator makes control adjustments to the module 700 to guide it to the correct location.

Both automatic and manual guidance may be assisted by passive guidance means, in the form of cables or chains along which the module 700 can slide, to arrive at the correct destination. The cables need not be permanently attached to the intended destination of the module 700, but may themselves be removable. Indeed, passive guidance may even be used to entirely replace both automatic and manual guidance.

The module itself 700 is provided with a protective cage 706, or protective struts, on its upper surface. This cage 706 provides protection to some of the systems provided on the module 700. For example, the module 700 is shown with four hydraulic rams 708 for adjusting the positions of onboard actuators, located inside module 700. In addition, there are two hydraulic rams 712 for lowering a stab plate located on the lower surface of the module 700. In addition, there is a control module 716 on the upper surface. The control module 716 may house various electronic control systems, onboard power supplies, hydraulic machinery, or any combination of these, for example. In addition, the control module 716 may provide a convenient attachment point for an umbilical cable (not shown) to provide external power or control signals to the module 700. Each of the six hydraulic rams 708, 712 and the control module 716 are located within the protective cage 706. Of course, it is not essential that hydraulic rams be used, and instead, electronic or pneumatic means could be employed for this purpose.

The lower portion of the module 700 is covered by a protective fairing 718. The fairing 718 in this example tapers so that the module 700 is narrower at its lower end that it is at its upper end. Of course, the fairing 718 could in principle be any shape, or indeed there could be no fairing at all in some examples.

Inside the fairing 718 may be variable buoyancy means, for example one or more floodable ballast tanks. The buoyancy can be reduced by selectively filling such tanks with water, and increased by emptying the water, e.g. forcing the water out, using compressed air. Alternatively, variable buoyancy means may be located outside the module 700, for example on top of the module 700.

Visible on the lower surface of the module 700 are a set of four toothed wheels 709 which provide a means for transferring power from actuators on the module 700 to the assembly. The toothed wheels have protrusions, or teeth, on their faces, so that when the module 700 is docked, the protrusions engage with corresponding recesses on the assembly thereby allowing rotational power to be transferred to the assembly. Each of the toothed wheels 709, together with a corresponding actuator, may be raised or lowered individually and selectively by a corresponding hydraulic ram 708 to engage or disengage with the corresponding portions of the assembly. The hydraulic rams may operate together or independently to engage or disengage each toothed wheel from its corresponding part on the assembly. As shown, the four toothed wheels 709 are in the extended (lowered) position.

Also visible on the lower surface of the module 700 are three alignment pins 713 which help to ensure that the module 700 is correctly aligned with the assembly. In addition, three hydraulic interconnects 714 are shown on the lower surface of the module 700. These allow the module 700 to provide an alternative type of motive power to the assembly when it is docked. The alignment pins 713 and the hydraulic interconnects 714 collectively form a stab plate, and may be raised and lowered together by actuating hydraulic rams 712. As shown the stab plate is in its extended, (lowered) position.

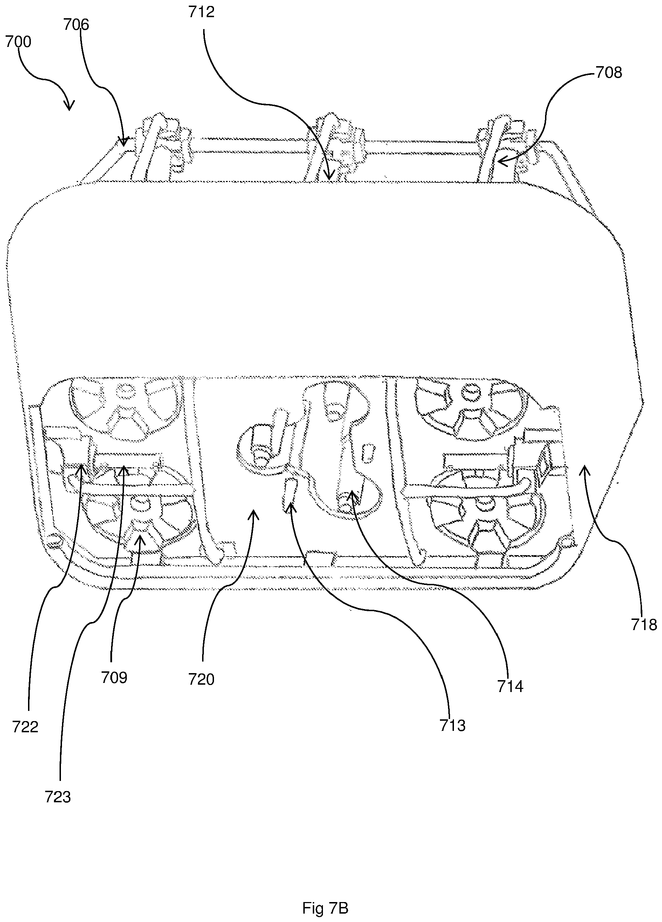

Turning now to Figure 7B, the module 700 is shown from a slightly different view. Here, the base of the module 700 is visible, and the toothed wheels 709 and the stab plate are shown in the retracted (raised) position. Also visible is a protective base plate 720. The base plate 720 protects the alignment pins 713, the hydraulic interconnects 714 and the toothed wheels 709 from accidental damage when they are in the retracted position. The base plate has a set of holes through which the alignment pins 713, the hydraulic interconnects 714 and the toothed wheels 709 may be extended so that they can be used to supply hydraulic power and rotational motive force to the assembly when required. Of course, it is not necessary that the stab plate and toothed wheels 709 are extendable and retractable, and examples where these components have a fixed position are envisaged.

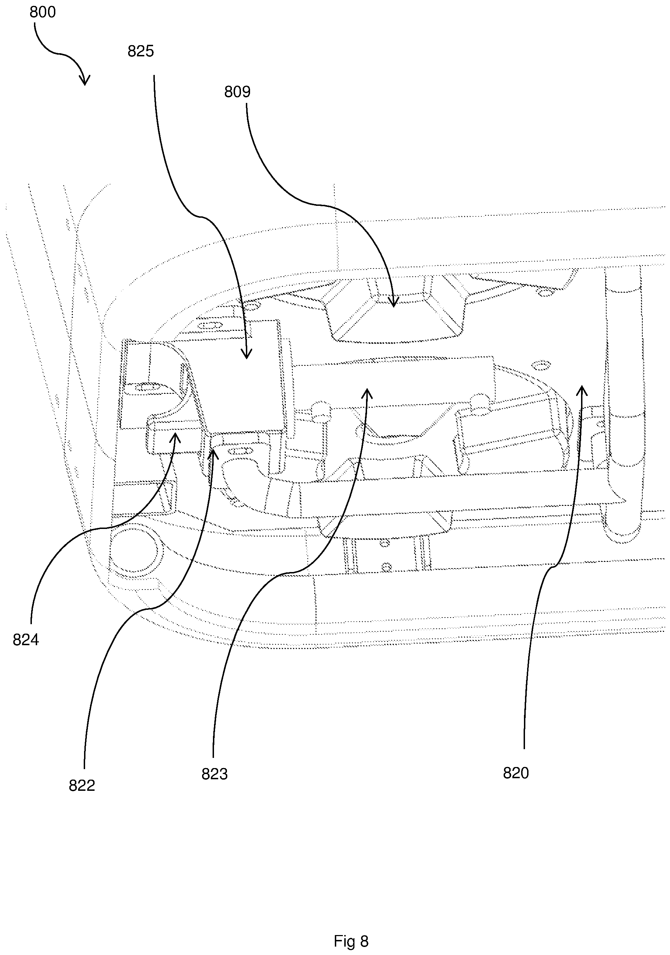

In addition, locking mechanisms 722 are visible on the lower surface of the module 700. Each locking mechanism comprises a hydraulic piston 723 and a locking tooth. The locking arrangement is described in more detail below, in relation to Figure 8.

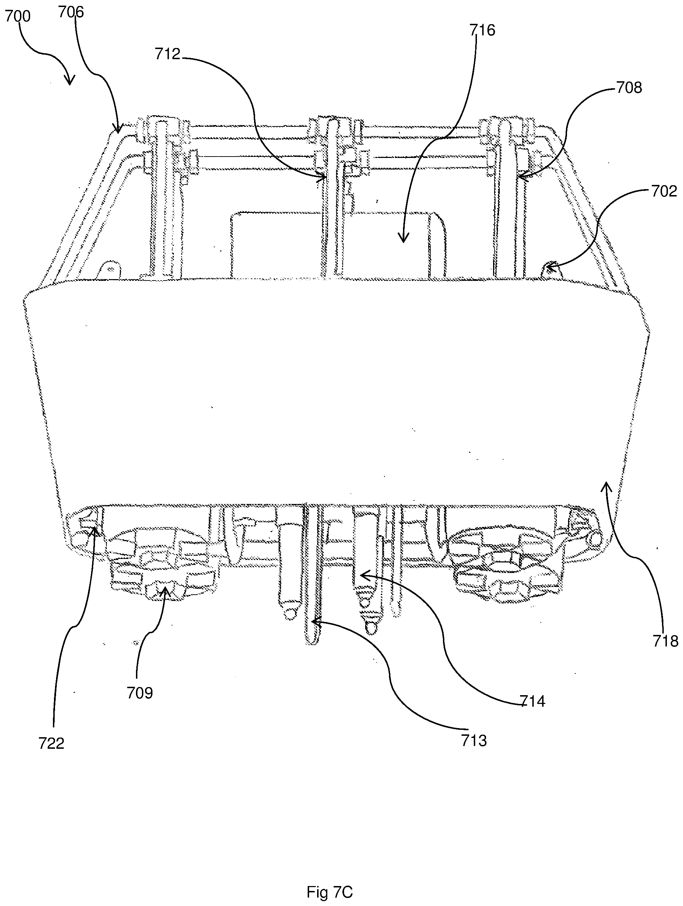

Turning now to Figure 7C, a third view of the module 700 is provided. In this view, hydraulic rams 708 and 712 have all been activated, and consequently toothed wheels 709, alignment pins 713 and hydraulic interconnects 714 are in the extended (lowered) position.

Figure 8 shows a close-up view of the module 700 of Figures 7A to 7C, and in particular, shows a detailed view of a locking mechanism, generally denoted by numeral 822, mounted on the base of module 800. The locking mechanism comprises a hydraulic ram 823, an engaging tooth 824, and a housing 825. The hydraulic ram will typically be retracted, causing the engaging tooth to be retained in the housing, at times when the module is not docking with the assembly. When the module is aligned with the docking point on the assembly, the locking mechanism 822 is activated, and the hydraulic ram extends 823, forcing the engaging tooth 824 out of the housing 825. Figure 8 shows the engaging tooth extended even though the module is not aligned with the docking point on the assembly. However, when the module is aligned with the docking point on the assembly, the engaging tooth is arranged to extend to grip a bar to hold the module firmly against the assembly.

While only a single locking mechanism 822 is shown in Figure 8, it is clear from Figure 7B that two locking mechanisms 822 may be employed, or even more, depending on the specific requirements. Also, while the locking mechanism 822 in Figure 8 makes use of a hydraulic ram 823 to move the engaging tooth 824, it will be apparent that any actuator may be used for this job, including pneumatic systems, electromechanical systems, and electromagnetic systems.

Moreover, the design of the engaging tooth 824 is clearly dependent on the design of the corresponding portions of the assembly, although it will be apparent to those skilled in the art how to design two such corresponding parts. Indeed, it is not even essential to use an engaging tooth, for example electromagnets could be used to selectively clamp the module firmly to the assembly.

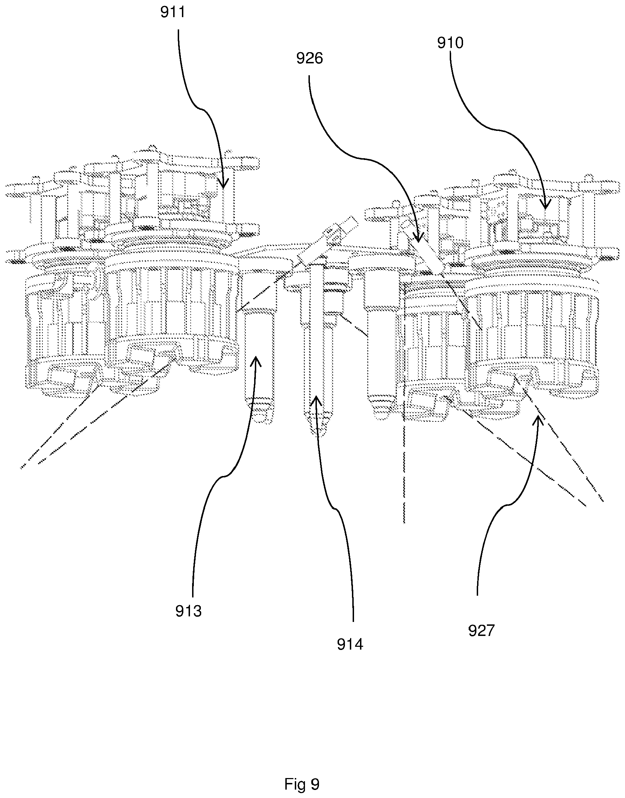

Figure 9 illustrates some of the internal parts of the module 700, by removing e.g. the fairing (718, Figures 7A to 7C), and supporting internal frame. Here, the four toothed wheels 909 are shown suspended from their respective actuators 910. In the Figure the actuators 910 are electric motors, but it will be apparent to the skilled person that other types of actuator could be used in the place of the electric motors without affecting the functionality of the module 900.

Additionally, each toothed wheel 909 and corresponding actuator 910 is slidably mounted on a set of guide rods 911. The guide rods 911 ensure that the actuator 910 and toothed wheel 909 extend in the desired direction when the hydraulic ram (not shown in Figure 9) extends to push the actuator 910 and toothed wheel 909 to the extended (lowered) position. That is to say, that the guide rods 911 ensure that the toothed wheels 909 remain aligned with their counterparts on the assembly as they are lowered into position by the hydraulic ram.

Also shown in Figure 9 is an imaging system, in this case comprising five cameras 926 each having a line of sight 927. The cameras are mounted so that their lines of sight collectively cover a wide field, to aid an operator in aligning the module with the docking point on the assembly. Optionally, the cameras may include a sonar system or other imaging means, or indeed, the imaging system may be entirely sonar-based, or based around another imaging technology. Additionally, supplementary tools for assisting an operator in executing the docking procedure correctly may be supplied as part of the imaging system. For example, lights may be provided, in the event that the local lighting conditions are insufficient for the cameras to be of use, lasers may be used to locate key features, or used as part of a ranging apparatus.

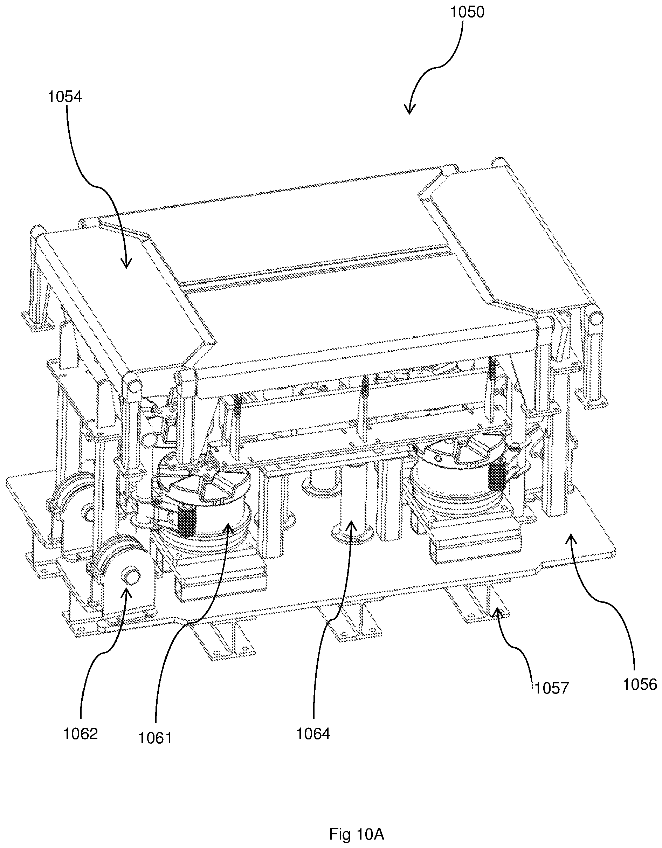

Moving on to Figure 10A, the docking point 1050 on the assembly is shown, although the body of the assembly is omitted in this view. This docking assembly is not part of the claimed invention, but may be helpful for understanding the present disclosure. In Figure 10A, a set of protective doors 1054 are shown in their closed configuration. Typically, the doors 1054 will be biased towards the closed position, so that the interface of the docking point remains covered. Of course, it is not essential that doors are provided at all. In general, it is intended that the upper surfaces of the doors 1054 are flat and flush with the outer body of the assembly when the doors at in the closed position to reduce drag on the assembly. However, it is also possible to form the docking point as a protrusion extending outwards from, or in an uncovered cavity within, the assembly.

At the lower portion of the docking point is a base plate 1056 supported by girders 1057. These provide support for the module as it is brought into contact with the assembly. In particular, it is important that these are designed to withstand heavy loads in the event that the module collides with the assembly at relatively high speeds, due for example to operator error, or rough water conditions.

The docking point may also include an electrical connection for transferring control signals, electrical power, or both to the assembly. Depending on the specific design requirements, there may be more than one electrical connection. For example, separation of power and control signals may be desirable to reduce interference. Similarly, the control signals may not be electrical in nature, but may comprise fibre optic connections, for example. This may have the advantage that control signals need not be made electrically, which can be expensive and prone to failure when implemented underwater. Indeed, even for surface-based assemblies, it is may be desirable to reduce the number of electrical connections where possible, due to problems encountered due to splashing water.

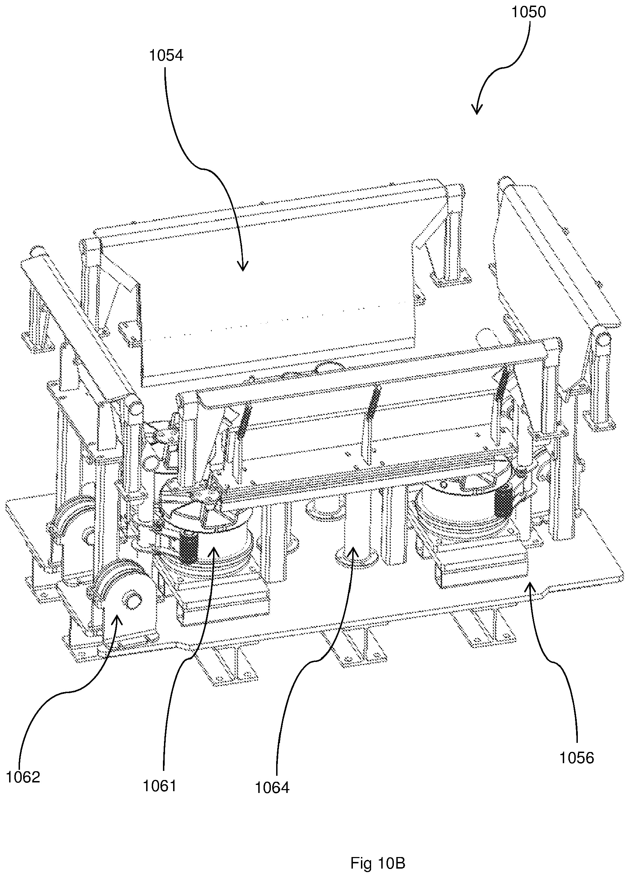

Turning now to Figure 10B, the docking point 1050 is presented from the same view, but this time with doors 1054 in their open configuration, in which the interface is not covered by the doors. Normally, the doors 1054 are biased towards a closed position unless the module has caused them to open. The module may cause the doors 1054 to open in a variety of ways. For example, the doors 1054 may be simply biased using a spring or other mechanical biasing means, and the module may simply push the doors out of the way as it is lowered into position. Alternatively, the doors 1054 may be controlled by an actuator, which detects the module's proximity and causes the door to open, for example. Further methods of implementing this functionality will be apparent to those skilled in the art.

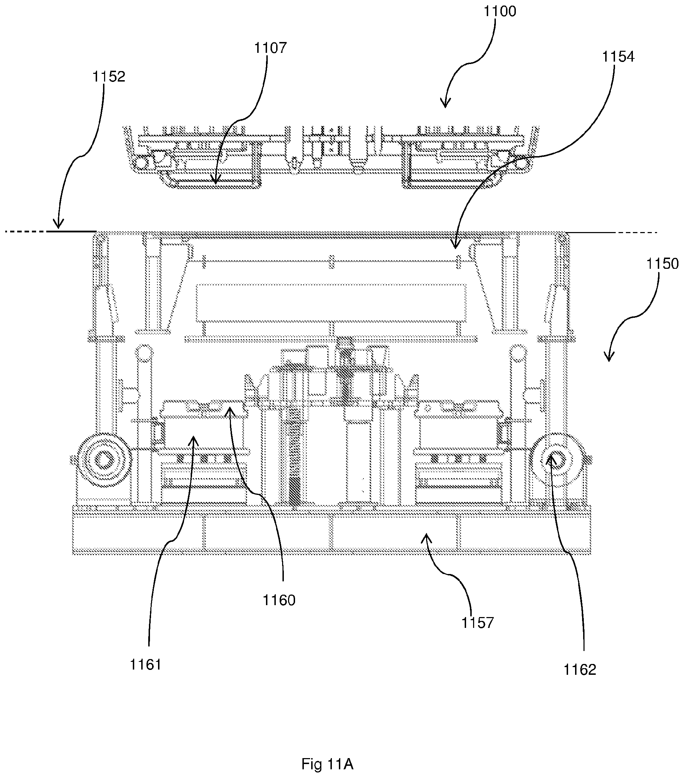

Also visible in the cutaway view of the docking point in Figures 10A and 10B are spools 1061 and pulleys 1062 which will be discussed in more detail below, with reference to Figures 11A to 11C.

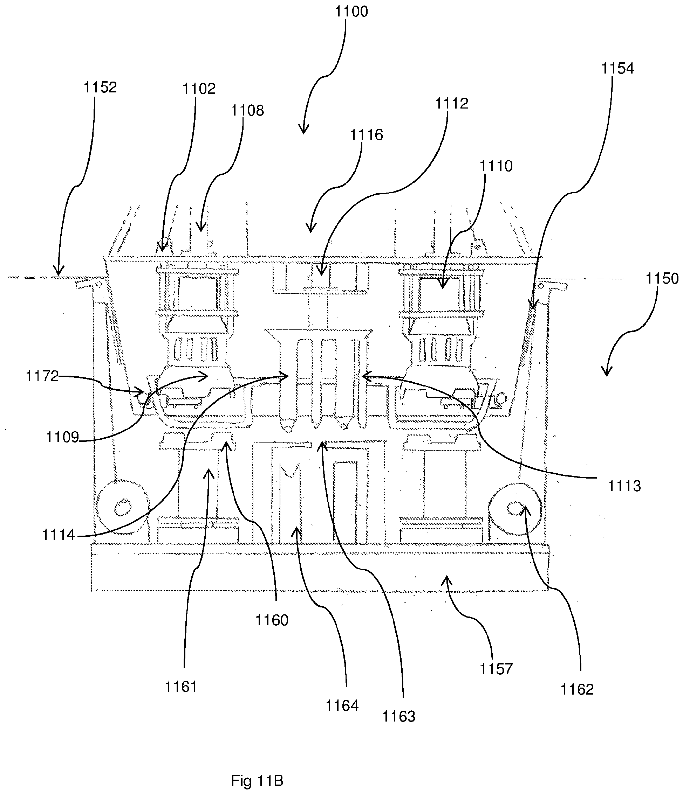

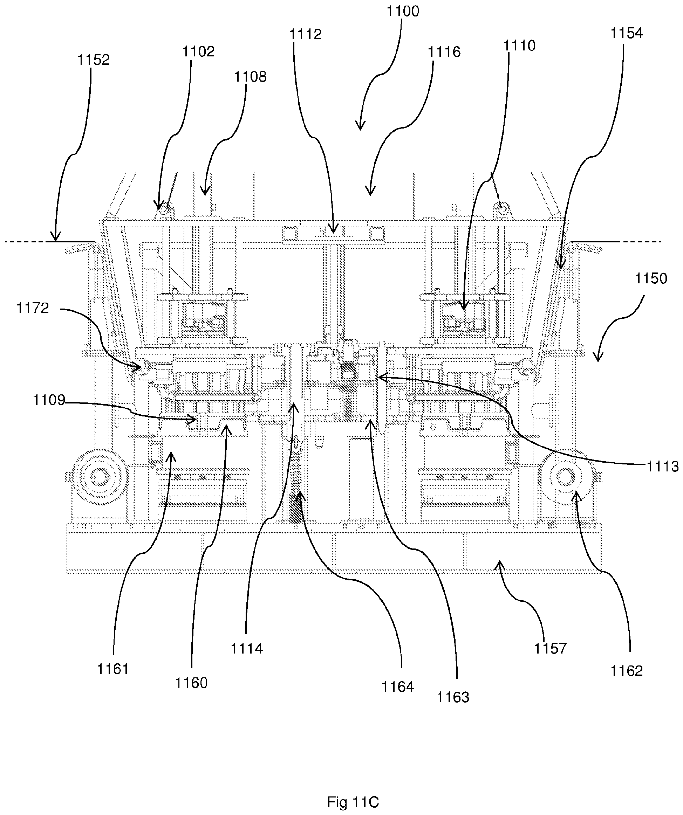

Figures 11A to 11C are sectional views showing progressive stages of a docking procedure in which a module 1100 docks with a docking point 1150 of an assembly. This docking procedure is not part of the claimed invention, but may be helpful for understanding the present disclosure. Figure 11A shows a view early on in the procedure, in which the module 1100 is located above the assembly, and is being lowered into position, supported by support cables 1104 connected to the module 1100 at attachment points 1102 (visible more clearly in Figures 11B and 11C).

The doors 1154 of the docking point are in their closed position, and the interface is therefore covered. In this Figure the docking point 1150 is recessed into the body of the assembly so that the outer casing 1152 of the assembly is flush with the doors 1154. The module 1100 has protective skids 1107 on its lower surface. These skids 1107 are arranged to contact the doors 1154 of the docking point 1150 as the module 1100 is lowered into position, and push the doors into their open configuration, thereby allowing the module 1100 access to the interface of the docking point 1150.

Figure 11B shows a view of the docking procedure just as the module 1100 has settled into position at the docking point 1150. Note that the fairing 1118 of the module 1100 is tapered towards its lower surface. This assists the alignment of the module 1100 with the docking point 1150, as the opening formed when the doors 1154 open is wider than the lowest portion of the module 1100, so it is not essential that the module 1100 be perfectly aligned with the docking point 1150 at the start of the docking procedure. In this way, the doors 1154 of the assembly form part of a particular type of passive guidance system for locating the module 1100 correctly. As the module 1100 is further lowered into position, the doors 1154 guide the module 1100 into finer alignment by contacting the tapered fairing 1118. This allows the docking point 1150 to act as a socket, into which the module 1100 can be inserted, acting as a plug.

In Figure 11B, the locking mechanisms 1122 are engaged and the engaging teeth grip corresponding portions on the docking point 1150. In this case it grips bars 1172 to hold the module in place.

Finally, turning to Figure 11C, the module 1100 is shown fully docked with the docking point 1150. In particular, the stab plate comprising alignment pins 1113 and hydraulic interconnects 1114 has been lowered by extending hydraulic rams 1112. This causes the alignment pins 1113 to slide into their corresponding recesses 1163 on the assembly. Similarly, the hydraulic interconnects 1114 are aligned with and connected to corresponding hydraulic interconnects 1164 on the assembly, thereby allowing the module 1100 to supply hydraulic motive power to the assembly.

In addition, the actuators 1110 and corresponding toothed wheels 1109 have been lowered into position by actuating hydraulic rams 1108. This causes the toothed wheels 1109 to engage with corresponding teeth 1160 of the docking point 1150. The teeth 1160 of the docking point are located on spools 1161, which can be driven by the module 1100 when it supplies rotational motive power to the assembly. In this way, the spools 1161 can act as a winch, drawing in or releasing cable as required. In this way adjustments to the orientation or position of the assembly can be made. For example, the cables which are drawn in or released by the spool 1161 may be anchoring cables for the assembly. By including a system of pulleys in the design of the assembly, the cables can be fed through to any part of the assembly, and form an attachment point for the anchoring system at that part of the assembly.

The module 1100 may thus centrally control the tension in each anchoring cable, and is able to change the orientation or the position of the assembly by adjusting each anchoring cable individually. Additionally or alternatively, the module 1100 may control ballast tanks or other variable buoyancy means associated with the assembly. Furthermore, the module 1100 may be used to adjust control surfaces on the assembly. For example, the assembly may have various surfaces, such as hydrofoils, or angled surfaces which can be moved. By changing the angle of these surfaces with respect to local current flow, the lift generated by them may be altered (even possibly making the lift negative). The lift is also dependent on the strength or speed of the local current flow, and therefore making these adjustments can result in dynamic adaptation of the lift of the assembly to changes in local currents.

Once the module 1100 has completed the required adjustments to the orientation and/or position of the assembly, it is detached from the docking point 1150. This process is in effect the reverse of the docking procedure, involving: retraction of the actuators 1110, toothed wheels 1109 and stab plate; disengagement of the locking mechanisms 1122; and raising the module 1100 away from the assembly. As the module 1100 moves away from the assembly, the doors 1154 close and cover the interface to protect it from damage.

The assembly to which the control module docks can be the turbine assembly shown in Figures 1 to 6, or indeed a marine assembly for any other purpose. The assembly may be submerged, submersible, or surface-based.

## Claims

1. A turbine assembly (200) having:
a support structure (224, 226, 228, 230, 232, 234) comprising first and second buoyancy devices (226) at opposing ends of the assembly (200) and plurality of trusses (228) spanning a width of the assembly (200) and connecting the first buoyancy device (226) to the second buoyancy device (226); and
a first turbine system, supported by the support structure (224, 226, 228, 230, 232, 234), the first turbine system having a centre of mass and being pivotally connected to the support structure (224, 226, 228, 230, 232, 234) so that the first turbine system is rotatable, relative to the support structure (224, 226, 228, 230, 232, 234), about a centre of rotation;
wherein the first turbine system includes:
a first flowing-water driveable turbine (216) for generating power from water flow, the first turbine having an operational axis (322), and being designed for optimum power output when local water flow is aligned with the operational axis (322); and
a second flowing-water driveable turbine (216) for generating power from water flow, the second turbine (216) having an operational axis (322), and being designed for optimum power output when local water flow is aligned with the operational axis (322); and wherein
the operational axes (322) of the first and second turbines (216) are parallel with one another; wherein
the centre of rotation is spaced away from the centre of mass of the first turbine system in a direction parallel to the operational axis (322) of the turbine; and wherein
the first turbine system includes a beam (224) connecting the first turbine (216) and the second turbine (216); and wherein the first turbine (216) is mounted on one surface of the beam (224), and the second turbine (216) is mounted on a second, opposing surface of the beam (224).

2. The turbine assembly (200) of claim 1, wherein the turbine assembly (200) is submersible.

3. The turbine assembly (200) of claim 1, wherein the turbine assembly (200) is configured for operation at the surface of a body of water.

4. The turbine assembly (200) of any preceding claim, wherein the first turbine system is rotatable independently of the parts (230, 234) of the support structure (224, 226, 228, 230, 232, 234) to which the first turbine system is directly connected.

5. A turbine assembly (200) according to any preceding claim, wherein the beam (224) comprises a hydrodynamic foil having a drag coefficient which varies with orientation, and wherein the turbines (216) are mounted on the hydrodynamic foil so that their operational axes (322) are aligned with the orientation in which the drag coefficient of the hydrodynamic foil is at a minimum.

6. A turbine assembly (200) according to any preceding claim, wherein each turbine (216) has a fairing to reduce hydrodynamic drag.

7. A turbine assembly (200) according to any preceding claim, wherein each turbine (216) has a fairing having a drag coefficient which varies with orientation, and is lowest in the orientation which is aligned with the operational axis (322) of the turbine.

8. A turbine assembly (200) according to any preceding claim, wherein the support structure comprises a platform (228), and the first turbine system is spaced away from the platform (228) by supports around which the first turbine system can rotate about an axis generally parallel to the plane of the platform (228).

9. A turbine assembly (200) according to claim 8, wherein the first turbine system is supported above the platform (228).

10. A turbine assembly (200) according to claim 8 or claim 9, wherein the first turbine system is arranged to rotate in response to changes of local water flow so that the turbine blades (318) rotate away from the platform (228).

11. A turbine assembly (200) according to any preceding claim, further comprising an actuator to rotate the first turbine system.

12. A turbine assembly (200) according to any preceding claim, further comprising a brake to resist the rotation of the first turbine system.

13. A turbine assembly (200) according to any preceding claim, further comprising a second turbine system, supported by the support structure (224, 226, 228, 230, 232, 234), the second turbine system having a centre of mass and being pivotally connected to the support structure (224, 226, 228, 230, 232, 234) so that the second turbine system is rotatable, relative to the support structure (224, 226, 228, 230, 232, 234), about a centre of rotation;
wherein the second turbine system is of the same design, and is connected to the support structure in the same way, as the first turbine system.

14. A turbine assembly (200) according to any preceding claim, wherein the turbine assembly (200) is positively buoyant in water, and is anchored to a water bed, so that the turbine assembly (200) is held in a state of floating equilibrium.

15. A turbine assembly (200) according to any preceding claim, wherein the turbine assembly (200) is variably buoyant in water.

## Patentansprüche

1. Turbinenanordnung (200), die Folgendes umfasst:
eine Stützstruktur (224, 226, 228, 230, 232, 234), die Folgendes umfasst: erste und zweite Auftriebsvorrichtungen (226) an gegenüberliegenden Enden der Anordnung (200) und eine Vielzahl von Gerüsten (228), die eine Breite der Anordnung (200) überspannen und die erste Auftriebsvorrichtung (226) mit der zweiten Auftriebsvorrichtung (226) verbinden; und
ein erstes Turbinensystem, das von der Stützstruktur (224, 226, 228, 230, 232, 234) getragen wird, wobei das erste Turbinensystem einen Schwerpunkt aufweist und schwenkbar mit der Stützstruktur (224, 226, 228, 230, 232, 234) verbunden ist, so dass das erste Turbinensystem relativ zu der Stützstruktur (224, 226, 228, 230, 232, 234) um einen Drehmittelpunkt drehbar ist;
wobei das erste Turbinensystem Folgendes umfasst:
eine erste durch fließendes Wasser antreibbare Turbine (216) zum Erzeugen von Strom aus einem Wasserfluss, wobei die erste Turbine eine Betriebsachse (322) aufweist und für eine optimale Leistungsabgabe ausgelegt ist, wenn der lokale Wasserfluss mit der Betriebsachse (322) ausgerichtet ist; und
eine zweite durch fließendes Wasser antreibbare Turbine (216) zum Erzeugen von Strom aus einem Wasserfluss, wobei die zweite Turbine (216) eine Betriebsachse (322) aufweist und für eine optimale Leistungsabgabe ausgelegt ist, wenn der lokale Wasserfluss mit der Betriebsachse (322) ausgerichtet ist; und wobei
die Betriebsachsen (322) der ersten und zweiten Turbine (216) parallel zueinander sind; wobei
der Drehmittelpunkt in einer Richtung parallel zur Betriebsachse (322) der Turbine vom Massenmittelpunkt des ersten Turbinensystems beabstandet ist; und wobei
das erste Turbinensystem einen Balken (224) aufweist, der die erste Turbine (216) und die zweite Turbine (216) verbindet; und wobei die erste Turbine (216) an einer Oberfläche des Trägers (224) angebracht ist und die zweite Turbine (216) an einer zweiten gegenüberliegenden Oberfläche des Trägers (224) angebracht ist.

2. Turbinenanordnung (200) nach Anspruch 1, wobei die Turbinenanordnung (200) eintauchbar ist.

3. Turbinenanordnung (200) nach Anspruch 1, wobei die Turbinenanordnung (200) zum Betrieb an der Oberfläche eines Gewässers konfiguriert ist.

4. Turbinenanordnung (200) nach einem der vorhergehenden Ansprüche, wobei das erste Turbinensystem unabhängig von den Teilen (230, 234) der Stützstruktur (224, 226, 228, 230, 232, 234), mit denen das erste Turbinensystem direkt verbunden ist, drehbar ist.

5. Turbinenanordnung (200) nach einem der vorhergehenden Ansprüche, wobei der Balken (224) eine hydrodynamische Folie mit einem Widerstandskoeffizienten aufweist, der mit der Ausrichtung variiert, und wobei die Turbinen (216) so auf der hydrodynamischen Folie montiert sind, dass ihre Betriebsachsen (322) mit der Ausrichtung ausgerichtet sind, in der der Luftwiderstandsbeiwert der hydrodynamischen Folie minimal ist.

6. Turbinenanordnung (200) nach einem der vorhergehenden Ansprüche, wobei jede Turbine (216) eine Verkleidung aufweist, um den hydrodynamischen Widerstand zu verringern.

7. Turbinenanordnung (200) nach einem der vorhergehenden Ansprüche, wobei jede Turbine (216) eine Verkleidung mit einem Widerstandsbeiwert aufweist, der sich mit der Ausrichtung ändert, und in der Ausrichtung am niedrigsten ist, die mit der Betriebsachse (322) der Turbine ausgerichtet ist.

8. Turbinenanordnung (200) nach einem der vorhergehenden Ansprüche, wobei die Stützstruktur eine Plattform (228), umfasst und das erste Turbinensystem von der Plattform (228) durch Stützen beabstandet ist, um die sich das erste Turbinensystem um eine Achse drehen kann, die im Allgemeinen parallel zur Ebene der Plattform (228) ist.

9. Turbinenanordnung (200) nach Anspruch 8, wobei das erste Turbinensystem über der Plattform (228) getragen wird.

10. Turbinenanordnung (200) nach Anspruch 8 oder 9, wobei das erste Turbinensystem so angeordnet ist, dass es sich als Reaktion auf Änderungen des lokalen Wasserflusses dreht, so dass sich die Turbinenschaufeln (318) von der Plattform (228) weg drehen.

11. Turbinenanordnung (200) nach einem der vorhergehenden Ansprüche, die ferner ein Stellglied zum Drehen des ersten Turbinensystems umfasst.

12. Turbinenanordnung (200) nach einem der vorhergehenden Ansprüche, die ferner eine Bremse umfasst, um der Drehung des ersten Turbinensystems zu widerstehen.

13. Turbinenanordnung (200) nach einem der vorhergehenden Ansprüche, die ferner ein zweites Turbinensystem umfasst, das von der Stützstruktur (224, 226, 228, 230, 232, 234) getragen wird, wobei das zweite Turbinensystem einen Schwerpunkt aufweist und schwenkbar mit der Stützstruktur (224, 226, 228, 230, 232, 234) verbunden ist, so dass das zweite Turbinensystem relativ zur Stützstruktur (224, 226, 228, 230, 232, 234) um einen Drehmittelpunkt drehbar ist;
wobei das zweite Turbinensystem den gleichen Aufbau aufweist und auf die gleiche Weise mit der Stützstruktur verbunden ist wie das erste Turbinensystem.

14. Turbinenanordnung (200) nach einem der vorhergehenden Ansprüche, wobei die Turbinenanordnung (200) in Wasser positiv schwimmfähig ist und an einem Wasserbett verankert ist, so dass die Turbinenanordnung (200) in einem Zustand schwimmenden Gleichgewichts gehalten wird.

15. Turbinenanordnung (200) nach einem der vorhergehenden Ansprüche, wobei die Turbinenanordnung (200) in Wasser variabel schwimmfähig ist.

## Revendications

1. Ensemble formant turbine (200) ayant :
une structure de support (224, 226, 228, 230, 232, 234) comportant des premier et deuxième dispositifs de flottabilité (226) à des extrémités opposées de l'ensemble (200) et une pluralité de treillis (228) recouvrant une largeur de l'ensemble (200) et raccordant le premier dispositif de flottabilité (226) au deuxième dispositif de flottabilité (226) ; et
un premier système de turbine, supporté par la structure de support (224, 226, 228, 230, 232, 234), le premier système de turbine ayant un centre de masse et étant raccordé de manière pivotante à la structure de support (224, 226, 228, 230, 232, 234) de telle sorte que le premier système de turbine est en mesure de tourner, par rapport à la structure de support (224, 226, 228, 230, 232, 234), autour d'un centre de rotation ;
dans lequel le premier système de turbine comprend :
une première turbine en mesure d'être entraînée par écoulement d'eau (216) servant à générer de la puissance à partir d'un écoulement d'eau, la première turbine ayant un axe opérationnel (322), et étant conçue à des fins de puissance optimale de sortie quand l'écoulement d'eau local est aligné sur l'axe opérationnel (322) ; et
une deuxième turbine en mesure d'être entraînée par écoulement d'eau (216) servant à générer de la puissance à partir d'un écoulement d'eau, la deuxième turbine (216) ayant un axe opérationnel (322), et étant conçue à des fins de puissance optimale de sortie quand l'écoulement d'eau local est aligné sur l'axe opérationnel (322) ; et dans lequel
les axes opérationnels (322) des première et deuxième turbines (216) sont parallèle l'un par rapport à l'autre ; dans lequel
le centre de rotation est espacé à l'opposé du centre de masse du premier système de turbine dans une direction parallèle par rapport à l'axe opérationnel (322) de la turbine ; et dans lequel
le premier système de turbine comprend une poutrelle (224) raccordant la première turbine (216) et la deuxième turbine (216) ; et dans lequel la première turbine (216) est montée sur une surface de la poutrelle (224), et la deuxième turbine (216) est montée sur une deuxième surface opposée de la poutrelle (224).

2. Ensemble formant turbine (200) selon la revendication 1, dans lequel l'ensemble formant turbine (200) est submersible.

3. Ensemble formant turbine (200) selon la revendication 1, dans lequel l'ensemble formant turbine (200) est configuré à des fins de fonctionnement au niveau de la surface d'une masse d'eau.

4. Ensemble formant turbine (200) selon l'une quelconque des revendications précédentes, dans lequel le premier système de turbine est en mesure de tourner indépendamment des pièces (230, 234) de la structure de support (224, 226, 228, 230, 232, 234) auquel le premier système de turbine est raccordé directement.

5. Ensemble formant turbine (200) selon l'une quelconque des revendications précédentes, dans lequel la poutrelle (224) comporte une feuille hydrodynamique ayant un coefficient de traînée qui varie en fonction de l'orientation, et dans lequel les turbines (216) sont montées sur la feuille hydrodynamique de telle sorte que leurs axes opérationnels (322) sont alignés sur l'orientation dans laquelle le coefficient de traînée de la feuille hydrodynamique est à un minimum.

6. Ensemble formant turbine (200) selon l'une quelconque des revendications précédentes, dans lequel chaque turbine (216) a un carénage pour réduire la traînée hydrodynamique.

7. Ensemble formant turbine (200) selon l'une quelconque des revendications précédentes, dans lequel chaque turbine (216) a un carénage ayant un coefficient de traînée qui varie en fonction de l'orientation, et qui est le plus faible dans l'orientation qui est alignée sur l'axe opérationnel (322) de la turbine.

8. Ensemble formant turbine (200) selon l'une quelconque des revendications précédentes, dans lequel la structure de support comporte une plate-forme (228), et le premier système de turbine est espacé à l'opposé de la plate-forme (228) par des supports autour desquels le premier système de turbine peut tourner autour d'un axe généralement parallèle par rapport au plan de la plate-forme (228).

9. Ensemble formant turbine (200) selon la revendication 8, dans lequel le premier système de turbine est supporté au-dessus de la plate-forme (228).

10. Ensemble formant turbine (200) selon la revendication 8 ou la revendication 9, dans lequel le premier système de turbine est agencé pour tourner en réponse à des changements de l'écoulement d'eau local de telle sorte que les aubes de turbine (318) tournent à l'opposé de la plate-forme (228).

11. Ensemble formant turbine (200) selon l'une quelconque des revendications précédentes, comportant par ailleurs un actionneur servant à faire tourner le premier système de turbine.

12. Ensemble formant turbine (200) selon l'une quelconque des revendications précédentes, comportant par ailleurs un frein faisant résistance à la rotation du premier système de turbine.

13. Ensemble formant turbine (200) selon l'une quelconque des revendications précédentes, comportant par ailleurs un deuxième système de turbine, supporté par la structure de support (224, 226, 228, 230, 232, 234), le deuxième système de turbine ayant un centre de masse et étant raccordé de manière pivotante à la structure de support (224, 226, 228, 230, 232, 234) de telle sorte que le deuxième système de turbine est en mesure de tourner, par rapport à la structure de support (224, 226, 228, 230, 232, 234), autour d'un centre de rotation ;
dans lequel le deuxième système de turbine est de la même conception, et est raccordé à la structure de support de la même manière que le premier système de turbine.

14. Ensemble formant turbine (200) selon l'une quelconque des revendications précédentes, dans lequel l'ensemble formant turbine (200) flotte positivement dans l'eau, et est ancré à un fond de l'eau, de telle sorte que l'ensemble formant turbine (200) est retenu dans un état d'équilibrage flottant.

15. Ensemble formant turbine (200) selon l'une quelconque des revendications précédentes, dans lequel l'ensemble formant turbine (200) est flottant de manière variable dans l'eau.
